(19) Europäisches Patentamt / European Patent Office / Office européen des brevets

(11) **EP 1 490 679 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(51) Int Cl.:
***G01N 27/447*** *(2006.01)*

(21) Anmeldenummer: **03714773.3**

(22) Anmeldetag: **05.03.2003**

(86) Internationale Anmeldenummer:
**PCT/EP2003/002225**

(87) Internationale Veröffentlichungsnummer:
**WO 2003/075004 (12.09.2003 Gazette 2003/37)**

(54) **VERFAHREN UND VORRICHTUNG ZUR PARALLELANALYSE VON BIOMOLEKÜLEN**

METHOD AND DEVICE FOR PARALLEL ANALYSIS OF BIOMOLECULES

PROCEDE ET DISPOSITIF D'ANALYSE EN PARALLELE DE BIOMOLECULES

(84) Benannte Vertragsstaaten:
**AT BE BG CH CY CZ DE DK EE ES FI FR GB GR HU IE IT LI LU MC NL PT RO SE SI SK TR**

(30) Priorität: **05.03.2002 DE 10209609**

(43) Veröffentlichungstag der Anmeldung:
**29.12.2004 Patentblatt 2004/53**

(73) Patentinhaber:
• **Ventzki, Robert Alexander**
**69221 Dossenheim (DE)**
• **Stegemann, Josef**
**69126 Heidelberg (DE)**

(72) Erfinder:
• **Ventzki, Robert Alexander**
**69221 Dossenheim (DE)**
• **Stegemann, Josef**
**69126 Heidelberg (DE)**

(74) Vertreter: **Isenbruck, Günter**
**Isenbruck Bösl Hörschler LLP**
**Eastsite One**
**Seckenheimer Landstrasse 4**
**68163 Mannheim (DE)**

(56) Entgegenhaltungen:
**EP-A2- 1 186 886    WO-A-00/73777**
**WO-A-01/43869    WO-A-99/00664**
**US-A- 5 622 819    US-A- 6 120 667**
**US-A1- 2002 168 643**

EP 1 490 679 B1

**Beschreibung**

Die Auftrennung (Fraktionierung) eines Stoffgemisches nach einem oder mehreren physikalischen oder chemischen Parametern der einzelnen Substanzen hat allgemein als Analyseverfahren in der Chemie und Biotechnologie einen hohen Stellenwert. Eine Technik der Auftrennung besteht darin, das Stoffgemisch (Probe), beeinflußt durch physikalische oder chemische Parameter, durch ein geeignetes Separationsmedium wandern zu lassen. Dabei werden die einzelnen Substanzen durch Wechselwirkungen mit dem Separationsmedium entsprechend ihren Eigenschaften aufgetrennt und liegen anschließend als einzelne Fraktionen vor. Als geeignete Parameter kommen zum Beispiel elektrische Kräfte, Druck, Zentrifugalkräfte, Gravitation und osmotische Kräfte, Diffusion, Siebeffekte, Ausschluß, Van-der-Waals-Kräfte, pH-Wert-Gradienten zum Einsatz. Das Separationsmedium kann je nach Anwendung sowohl fest, flüssig als auch kolloid vorliegen. Aus dem unterschiedlichen Wanderungsverhalten der einzelnen Fraktionen lassen sich im allgemeinen Rückschlüsse auf ihre Eigenschaften ziehen. Im Falle einer qualitativen Analyse des Stoffgemisches werden nur die relevanten Eigenschaften der Fraktionen während oder nach der Separation gemessen und aufgezeichnet und die Fraktionen selbst verworfen. Im Falle einer quantitativen Analyse werden die Mengenanteile der einzelnen Fraktionen am Stoffgemisch während oder nach der Separation bestimmt. Im Falle einer präparativen Trennung werden die einzelnen Fraktionen aufgefangen und stehen somit zur weiteren Verarbeitung oder Analyse zur Verfügung.

Die bisher eingesetzten Techniken sind beschränkt auf die Auftrennung des Stoffgemisches in einem im wesentlichen eindimensional (im folgenden als 1D-Auftrennverfahren bezeichnet) oder zweidimensional (im folgenden als 2D-Auftrennverfahren bezeichnet) ausgeführten Separationsmedium:

Bei 1D-Auftrennverfahren wird eine einzelne Probe im wesentlichen punktuell an der Öffnung eines (Kapillar-) Röhrchens plaziert, welches das Separationsmedium enthält und in diesem aufgetrennt. Zur gleichzeitigen Auftrennung von mehreren Proben wird eine entsprechende Anzahl von (Kapillar-)Röhrchen benötigt. Beispiele hierfür sind die Kapillar-Gel-Elektrophorese zur DNA-Analyse sowie das Hochdruck-Flüssigkeits-Chromatografie(HPLC-)Verfahren.

Bei 2D-Auftrennverfahren sind mehrere Einzelproben zueinander benachbart in einer linearen Reihe (eindimensional) angeordnet. Sie durchlaufen das im wesentlichen zweidimensional (als flächige Schicht) vorliegende Separationsmedium in mehreren parallelen nebeneinander liegenden Mikrationsbahnen. Die Anzahl der mit dieser zweidimensionalen Anordnung gleichzeitig auftrennbaren Proben ist durch die Anzahl der Bahnen im Separationsmedium gegeben. Beispiele hierfür sind die Polyacrylamid-Gel-Elektrophorese (PAGE) zur DNA-Sequenzierung sowie die 2D-Gel-Elektrophorese zur Proteinanalyse.

Bei 1D- und 2D-Auftrennverfahren ist geometrisch bedingt die Oberfläche des Separationsmediums groß gegenüber seinem Volumen. Deshalb werden viele Nachteile der 1D- und 2D-Auftrennverfahren durch Randeffekte an den Oberflächen des Separationsmediums bzw. den das Separationsmedium umgebenden Begrenzungsflächen verursacht. Beispiele für Ursachen dieser Randeffekte sind Wechselwirkungen der Probenfraktionen oder des Separationsmediums mit den umgebenden Begrenzungsflächen sowie thermische Effekte.

Beim 1D-Auftrennverfahren besteht z.B. das Problem, das dafür eingesetzte Kapillar-Röhrchen aufgrund Ihres geringen Durchmessers (In der Regel einige Zehntel mm) durch Anhaftung der Proben an den Innenwänden der Kapillar-Röhrchen zum Verstopfen neigen. Die Kapillare wird dadurch zur weiteren Verwendung unbrauchbar. Aus dem gleichen Grund ist das Einbringen des Separationsmediums nicht einfach. Weiterhin können hierbei oder während der Separation entstehende Blasen die Kapillare blockieren.

Ein ebenfalls auf Randeffekten beruhender Nachteil des 1D- bzw. 2D-Auftrennverfahrens liegt darin, daß sich aufgrund unterschiedlicher Migrationszeiten der Proben im Zentrum des Separationsmediums verglichen mit den Randbereichen, ein Aufweiten der Banden weiter einstellen kann (sogenannter Smilling-Effekt). Eine Vergrößerung der Bandenbreite verringert jedoch die Trennschärfe der Analyse. Dieser Effekt wird durch Wechselwirkungen zwischen den Proben und der Oberfläche verursacht, welche das Separationsmedium umgibt und aufnimmt sowie im Falle der elektrophoretischen Auftrennung durch thermisch bedingte Inhomogenitäten der Viskosität des Separationsmediums und durch elektroosmotische Effekte an seinen Begrenzungsflächen.

Während bei üblichen 1 D-Auftrennverfahren eine Vielzahl einzelner Kapillar-Röhrchen einzeln zu befüllen sind, wird bei einigen gängigen 2D-Auftrennverfahren das Separationsmedium, z.B. ein Gel, zwischen zwei Glasscheiben einer Gel-Kassette eingebracht. In beiden Fällen müssen sowohl die Kapillar-Röhrchen als auch die das Separationsmedium umgebenden Glasscheiben äußerst rein sei, um die oben angeführten Randeffekte zu minimieren. Ferner besteht das Risiko, daß es beim Befüllen oder während des Trennvorganges im Separationsmedium zur Bildung von Blasen kommt.

Ein gemeinsamer Nachteil beider skizzierten Auftrennverfahren liegt darin, daß die Zahl der gleichzeitig analysierten Proben (maximal einige 100) relativ gering ist.

Zur Lösung oder zur Umgehung der oben aufgeführten Probleme wurde eine Vielzahl von Techniken vorgeschlagen und Verfahren ausgearbeitet. Die im folgenden angeführten Veröffentlichungen umschreiben den Stand der Technik und zeigen weitere für die Beschreibung des vorgeschlagenen Verfahrens bedeutende Aspekte.

US 5,051,162 bezieht sich auf eine Trenn-Vorrichtung nach dem Elektrophorese-Verfahren kombiniert mit einem Fluoreszenzdetektor und auf einen diesem zugeordneten Probenbehälter. Das Elektrophoresegerät enthält eine Anzahl von in plattenförmiger Form vorliegenden Gelschichten, die im wesentlichen parallel zueinander angeordnet sind, wobei diese plattenförmigen (im wesentlichen zweidimensionalen) Gelschichten eine Vielzahl von Wanderungslinien darstellen, entlang welcher Probenfraktionen, die zuvor markiert wurden, von oberen Enden zu unteren Enden der plattenförmigen Gelschichten zu wandern vermögen. Es ist ein oberer Pufferbehälter vorgesehen, der eine Pufferlösung enthält, die in Kontakt mit den oberen Enden der plattenförmigen Gelschichten steht. Darunter befindet sich ein weiterer Pufferbehälter, welcher ebenfalls eine Pufferlösung enthält, die mit den unteren Enden der plattenförmigen Gelschichten in Verbindung steht. Es sind Vorrichtungen vorhanden zur Erzeugung eines elektrischen Potentials zwischen der Pufferlösung im besagten oberen Pufferbehälter und der Pufferlösung, welche im unteren Behälter enthalten ist. Dadurch wirkt eine elektrophoretische Kraft auf die Probenfraktionen und bewirkt deren Wanderung entlang der Migrationslinien. Es sind Anregungseinrichtungen zur Fluoreszenz-Anregung der entsprechend markierten Probenfraktionen vorgesehen. Die Fraktionen wandern auf den besagten Migrationslinien in den plattenförmigen Gelschichten. Es sind Einrichtungen zur individuellen und gleichzeitigen Detektion von Fluoreszenzlicht vorgesehen, welches von den Probenfraktionen, die markiert sind und sich in den besagten Migrationslinien bewegen, emittiert wird, wobei das Fluoreszenzlicht an den unteren Enden der plattenförmigen Gelschichten ausgestrahlt wird.

Die Veröffentlichung "Gene Expression Analysis by massively parallel signature sequencing (MPSS) on microbead arrays", Sidney Brenner, Maria Johnson, John Bridgham, George Golda, David H. Lloyd, Davida Johnson, Shujun Luo, Sarah McCurdy, Michael Foy, Mark Ewan et al. aus Nature Biotechnology Vol. 18, Juni 2000, Seiten 630 bis 634 beschreibt ein Verfahren zur Parallelanalyse einer großen Anzahl von Sequenzen. Ein System, wie in diesem Artikel veröffentlicht, umfasst eine auf einen Peltierelement montierte Durchflusszelle, die unterhalb eines konfokalen Mikroskops angeordnet ist. Dem konfokalen Mikroskop ist ein Filter sowie eine CCD-Kamera nachgeordnet, welche ihrerseits mit einem Rechner verbunden ist. Über eine Reagenzienpumpe und ein mit dieser in Verbindung stehendes Reservoir und einem Ventilblock wird der Durchfluss des Probenmaterials durch eine auf dem Peltierblock vorgesehene Durchflusszelle realisiert. Diese Publikation beschreibt u.a die Anordnung von Partikeln in einer Ebene mit Hilfe eines Fluoreszenz-aktivierten Durchfluss-Cytometers (FACS-Gerät) und ist deshalb relevant für den in der vorliegenden Patentanmeldung beschriebenen Bereich Probenladung.

Aus der Veröffentlichung "Effect of gelation conditions on the gel structure and resolving power of agarose-based DNA sequencing gels", Noriko Kusukawa, Mikhail V. Ostrovsky, Mark M. Garner, in Elektrophoresis 1999, Vol. 20, Seite 1455 bis 1460 werden die Bedingungen untersucht, unter denen Agarose-Gele, die zur DNA-Sequenzierung eingesetzt werden, gelatinieren. Die verwendeten Gele werden sowohl einer rapiden Abkühlung als auch einer allmählichen Abkühlung ausgesetzt. Mittels eines Elektronenmikroskopes vorgenommene Analysen belegen, daß die schnell abgekühlten Gele eine homogene Porenstrukturen mit einer kleinen durchschnittlichen Porengröße aufweisen, gegenüber solchen Gelen, die langsam abgekühlt werden und eine wesentlich größere durchschnittliche Porengröße aufweisen. Außerdem sind die rasch abgekühlten Gele optisch transparenter. Die Photodetektion der Proben ist daher einfacher.

WO 99/00664 A bezieht sich auf eine automatische Elektrophorese-Vorrichtung mit einer Vielzahl von mit Gel beladenen Kapillarröhrchen. Ein Ende der Kapillarröhrchen ist in einer zweidimensionalen Anordnung angeordnet, wobei die Anordnung derjenigen von Vertiefungen einer Mikrotiterplatte entspricht und ein Wechsler für entsprechende Mikrotiterplatten vorgesehen ist. Ferner ist eine Vorrichtung zur Beschickung von Gel und einer aus einer Vielzahl von ausgewählten Flüssigkeiten zu den zweiten Enden der Kapillarröhrchen vorgesehen, ebenso wie eine Lichtquelle und eine Erfassungskamera.

US 6 120 667 A bezieht sich auf eine Elektrophorese-Vorrichtung mit mehreren Kapillaren. Eine Vielzahl von Kapillarröhrchen, welche mit einem Gel beladen sind, weist eine Probeneintragsseite auf, wobei die Enden der Kapillarröhrchen auf dieser Seite in einer zweidimensionalen Anordnung angeordnet sind. Das andere Ende der Vielzahl von Kapillarröhrchen stellt einen Detektionsteil dar. Mit der Elektrophorese-Vorrichtung werden Basen-Sequenzen von DNA-Fragment-Proben elektrophoretisch aufgetrennt, wobei unterschiedliche Basen-Sequenzen mit unterschiedlichen Fluoreszenzmarkern versehen werden und eine parallele Elektrophorese in der Vielzahl der Kapillarröhrchen stattfindet.

US 5 622 819 A beschreibt ein (Fermentations-)Verfahren, bei welchem sich eine Vielzahl von Fraktionen einer Einzelprobe in einem gemeinsamen dreidimensionalen Raum (Bioreaktor) befinden. Der Raum wird von einer Flüssigkeit durchströmt, die ihn vollständig ausfüllt und unterliegt durch Rotation einer Zentrifugalkraft. Während des (Fermentations-)Prozesses sind die Probenfraktionen (z.B. lebende Bakterien oder subzelluläre Biokatalysatoren unterschiedlicher Größe, etc.) in dem gemeinsamen Raum der Zentrifugalkraft und der in entgegengesetzter Richtung auf sie einwirkenden Stokes'schen Reibungskraft in der durchströmenden Flüssigkeit ausgesetzt. Es erfolgt dadurch eine Separation der Einzelprobe in ihre Fraktionen, welche entsprechend ihrer spezifischen Eigenschaften (Größe, Form, Dichte) an der Stelle im Raum immobilisiert werden, an welcher sich die beiden o.g. Kräfte die Waage halten. Auch die parallele Separation einer Vielzahl von Einzelproben in einer Vielzahl solcher Räume wird beschrieben.

WO 00/73777 A beschreibt ein Verfahren und eine Vorrichtung zur Anordnung von kolloidalen Partikeln und Biomolekülen nahe einer ebenen Oberfläche mit Hilfe elektrischer Felder zwischen einer isolierten Elektrode und einer Elektrolytlösung. Dabei können die Proben durch Einwirkung zeitlich und räumlich veränderlicher elektrischer Felder und durch Wechselwirkung mit der Oberfläche auf dieser bewegt werden. Es werden verschiedene Techniken zur kontrollierten Manipulation von verschiedenen Proben sowie zu deren regelmäßiger Anordnung in einer zweidimensionalen Probenanordnung beschrieben. Im Zusammenhang mit solchen lateralen Bewegungen entlang einer ebenen Oberfläche werden auch elektrophoretische Analyse und Trennung (Separation) beschrieben. Weiterhin wird die Herstellung von Materialoberflächen mit spezifischen, für das Verfahren notwendigen Eigenschaften beschrieben.

US 2002/168643 A1 bezieht sich auf eine Elektrophorese-Verfahren zur gleichzeitigen Separation und Aufreinigung einer Vielzahl von molekularen Proben. In einer hierzu vorgesehenen Vorrichtung findet die Separation und Aufreinigung ausgehend von einer zweidimensionalen Anordnung der Proben statt. Die einzelnen Proben migrieren hierbei in Richtung einer zur zweidimensionalen Anordnung senkrecht stehenden dritten Koordinate durch einzelne Probenkanäle.

EP 1186886 A2 bezieht sich auf ein dreidimensionales Elektrophorese-Verfahren zur gleichzeitigen Separation und Aufreinigung einer Vielzahl von molekularen Proben. Angaben zur Wärmeabfuhr werden jedoch nicht gemacht.

Angesichts der aus dem Stande der Technik aufgezeigten Lösungen liegt der Erfindung die Aufgabe zugrunde, ein Verfahren und eine Vorrichtung anzugeben, mit welchen eine mit einer hohen Durchsatzrate erfolgende Auftrennung von Stoffgemischen, z.B. Gemische von Biomolekülen, DNA-Fragmenten, Proteinen oder dergleichen erfolgen kann und eine gleichzeitige (On-line) oder anschließende Detektion sowie ergänzend oder alternativ eine qualitative, quantitative und präparative Analyse ermöglicht wird.

Erfindungsgemäß wird diese Aufgabe durch die Merkmale der Patentansprüche 1 und 12 gelöst.

Mit dem erfindungsgemäß vorgeschlagenen Verfahren und der zur Durchführung dieses Verfahrens vorgeschlagenen Vorrichtung läßt sich eine drei-dimensionale Auftrennung und damit eine Analyse von bis zu $10^4$ Proben in paralleler Abarbeitung durchführen. Eine dreidimensionale Auftrennung ist im Gegensatz zu den oben beschriebenen ein- und zweidimensionalen Separationen gekennzeichnet durch die Auftrennung in einem Separationsmedium, welches sich im wesentlichen über drei Dimensionen erstreckt, ferner dadurch, daß die aufzutrennenden Proben dem Separationsmedium zweidimensional angeordnet zugeführt werden. Das erfmdungsgemäß vorgeschlagene Verfahren zeichnet sich insbesondere durch eine sehr einfache Handhabung hinsichtlich der Zufuhr der zu analysierenden Probengemische aus. Dazu können beispielsweise DNA-Sequenzierungsreaktionen auf einem zweidimensionalen, also im wesentlichen flächigen Träger durchgeführt werden, welcher dann der Vorrichtung zur Auftrennung der Einzelproben zugeführt wird. Bei der Gen-Expressionsanalyse durch das "Ansequenzieren" der exprimierten Gene kann der Nutzer von allen Vorteilen des SAGE-Verfahrens profitieren, spart sich jedoch arbeitsaufwendige Schritte bei der Probenvorbereitung. Mit dem erfindungsgemäßen Verfahren einer 3-dimensional erfolgenden Auftrennung von Einzelproben können diese hinsichtlich dreier unterschiedlicher und unabhängiger Parameter analysiert werden. Als Parameter seien beispielhaft der pH-Wert, die Größe und die Hydrophobizität (bzw. Solubilität) der einzelnen Proben genannt.

Beim erfindungsgemäß vorgeschlagenen Verfahren einer Auftrennung in einem dreidimensionalen Separationsmedium hält sich die Mehrzahl der Proben nicht in dessen Randbereich auf, so daß die im Zusammenhang mit 1-dimensional bzw. 2-dimensional durchgeführten Auftrennverfahren durch Randeffekte verursachte Probleme, z.B. hinsichtlich einer Aufweitung der Banden (Smiling=Effekt), nicht auftreten können. Insbesondere unterbleibt das dem eindimensionalen Auftrennverfahren innewohnende Verstopfen von Kapillarröhrchen vollständig. Hinsichtlich der Handhabung bietet das erfindungsgemäß vorgeschlagene Verfahren den nicht unerheblichen Vorteil, daß nunmehr ein Befüllen einzelner Kapillarröhrchen - wie beim 1-dimensionalen Auftrennverfahren üblich - entfallen kann. Ferner sind an das Geschick der Handhabungspersonen im Vergleich zum Einführen des Separationsmediums zwischen zwei Glasplatten - wie bei einigen üblichen zweidimensionalen Auftrennverfahren erforderlich - geringere Anforderungen zu stellen, da gemäß des erfindungsgemäß vorgeschlagenen Verfahrens das Separationsmedium in einen im wesentlichen zylinderförmigen Behälter eingegossen wird. Ausserdem steht beim dreidimensionalen Auftrennverfahren ein wesentlich größeres Volumen an Separationsmedium zur Verfügung, in welchem die Auftrennung einer Vielzahl von Proben in paralleler Abarbeitung gleichzeitig erfolgen kann.

Die zur Herbeiführung einer Migration der Proben durch das Separationsmedium erforderlichen Kräfte können physikalischer oder chemischer Natur sein. Als Beispiele seien elektrische Kräfte, Gravitation, Zentrifugalkräfte, oder durch Diffusion, Druck- und Konzentrationsgradienten sowie durch Osmose entstehende Kräfte angeführt, die einzeln oder in Kombination auf die Proben wirken können.

**Elektrophorese**

Das erfindungsgemäße dreidimensionale Separationsverfahren bedient sich einer durch ein elektrisches Feld auf die Proben ausgeübten Kraft, um deren Migration durch das Separationsmedium zu bewirken. Hierzu sind die Proben im allgemeinen elektrisch geladen; der Separationsvorgang wird als Elektrophorese bezeichnet. Aufgrund unterschiedlicher Ladung und Masse bewegen sich die Proben-Moleküle mit unterschiedlichen Geschwindigkeiten durch das Separationsmedium. Meistens wird die relative Beweglichkeit einer Substanz bezogen auf einen mitaufgetrennten Standard angegeben. Dadurch lassen sich nicht nur Stoffe auftrennen, sondern auch durch ihr Wanderungs-Verhalten näher charakterisieren.

Im Rahmen des erfindungsgemäß vorgeschlagenen Verfahrens und der Vorrichtung erfolgt die Separation nach dem Elektrophoreseprinzip durch Auftrennung in stabilisierenden Medien, wie z.B. Agarose-Gele oder Polyacrylamid-Gele.

Das Trennprinzip der Elektrophorese hat als Analyseverfahren in der Biotechnologie bereits einen hohen Stellenwert erreicht, da der Trennmechanismus beinahe universell einsetzbar ist. So z.B. lassen sich Eiweiße, Aminosäuren, Peptide, Blutplasmaproteine, Vitamine, Enzyme, Zellen und Zellbestandteile auftrennen; zudem handelt es sich um ein sehr schonendes Verfahren, d.h. die Proben stehen im allgemeinen nach dem Trennvorgang für weitere präparative oder analytische Schritte zur Verfügung.

## Joule'sche Wärme

Ein Charakteristikum der Elektrophorese ist der durch das Separationsmedium auftretende Stromfluß und die damit verbundene Umsetzung von elektrischer Energie in Wärme. Diese wird als Joule'sche Wärme bezeichnet; sie wird innerhalb des vom elektrischen Stromfluß durchsetzten Mediums, in diesem Fall innerhalb des Separationsmediums, frei und bewirkt in diesem einen Temperaturanstieg. Dieser würde einerseits eine Zersetzung der Proben und andererseits eine Veränderung der Trenneigenschaften des Separationsmediums und letztlich dessen Zersetzung bewirken. Schon vor der eigentlichen Zersetzung des Separationsmediums kommt es im allgemeinen zu einer temperaturabhängigen Veränderung seiner elektrischen Leitfähigkeit und Viskosität. Dies ist eine der hauptsächlichen Ursachen für den oben angeführten Effekt der Bandenverbreiterung (Smiling-Effekt) und die Abweichungen der Migrationsbahnen vom gewünschten (parallelen) Verlauf. Bei allen Elektrophorese-Trennverfahren muß deshalb dafür Sorge getragen werden, daß die Joule'sche Wärme aus dem Separationsmedium abgeführt wird, um einen übermäßigen Temperaturanstieg in diesem zu verhindern. Bei der Thermostatisierung des Trennaufbaus kommt es dabei nicht nur auf die insgesamt abzuführende Wärmeleistung an, sondern auch auf die Schaffung bzw. Einhaltung eines spezifischen Temperaturprofils innerhalb des Separationsmediums. Je nach Trennverfahren ist die Einhaltung eines vorgegebenen Temperaturverlaufs im Separationsmedium mehr oder weniger kritisch für die erzielbare Trennschärfe und die entsprechenden zur Thermostatisierung notwendigen Maßnahmen mehr oder weniger aufwendig.

## Temperaturprofil

Mittels des erfindungsgemäß vorgeschlagenen Elektrophorese-Verfahrens und der zugehörigen Vorrichtung lassen sich die einzelnen Migrationsbahnen der Proben durch das Separationsmedium durch thermische Isolation des Separationsvolumens, in radiale Richtung gesehen, parallel zur Hochachse des Analysehohlraumes halten. Dazu kann ein, den ersten Raum umschließenden, zweiter Raum ein Medium enthalten, welches als thermische Isolation für den ersten Raum dienen kann. Da idealerweise kein Wärmetransport in radialer Richtung über die Begrenzungswandung des ersten Raumes in die Umgebung erfolgt, kann die beim Elektrophorese-Verfahren entstehende Joule'sche Wärme ausschließlich über die Stirnseiten einer zur Durchführung des erfindungsgemäß vorgeschlagenen Verfahrens geeigneten Vorrichtung abgeführt werden.

Unter den idealisierenden Annahmen, daß ein Wärmeaustausch nur durch Wärmeleitung erfolgt und weiterhin, daß ein homogener Wärmeumsatz im Separationsmedium stattfindet, stellt sich im Analysehohlraum ein Temperaturprofil gemäß folgender quadratischer Funktion ein:

$$T(z) = T_{max} - az^2$$

Wegen der oben genannten, vereinfachenden Annahmen gilt obige Formel nur in grober Näherung, da in der Realität noch andere Mechanismen des Wärmeaustausches (z.B durch Strahlung) vorliegen. Außerdem ist der Joule'sche Wärmeumsatz nicht homogen, unter anderem bedingt durch die inhomogene Temperatur entlang der z-Achse, die über die elektrolytische Leitfähigkeit die elektrischen Feldparameter beeinflußt.

Im inneren -Zentralbereich des ersten Raumes und in dessen Peripheriebereich herrscht jedoch im wesentlichen gleiche Temperatur, mit anderen Worten, es liegt kein TemperaturGradient in radialer (r-) Richtung vor. Das identische Temperaturprofil entlang der Hochachse (z-Achse) im Inneren des Raumes und an dessen Randbereichen bewirkt eine in radialer Richtung des ersten Raumes gesehen isotrope Gelviskosität und gewährleistet gleichmäßige Ionenmobilität.

Die sich in dem ersten Raum einstellenden elektrischen Feldlinien und Migrationsbahnen der Proben von einer Elektrode zur gegenüberliegenden Elektrode verlaufen dann parallel zur z-Achse, d.h. der Hochachse des ersten Raumes ohne Auslenkung in radiale Richtung.

Gemäß des erfindungsgemäß vorgeschlagenen Elektrophorese-Verfahrens entspricht das Temperaturprofil im Separationsmedium parallel zu seiner Hochachse (z-Achse) in dessen Randbereich dem Temperaturprofil im Zentralbereich. Dadurch ist eine Auslenkung, d.h. eine Krümmung der Migrationsbahnen aufgrund von Temperatureinflüssen ausgeschlossen. Die Ausbildung der von der Proben-Ladefläche ausgehend streng parallel zur Z-Achse verlaufenden Migrationsbahnen der Einzelproben kann dadurch unterstützt werden, daß im ersten Raum, sowie gegebenenfalls im diesen umgebenden zweiten Raum, an der jeweiligen Oberfläche mit dem Flächennormal senkrecht zur Probenmigrationsrichtung mittels einer Temperier-Vorrichtung entlang der Probenmigrationsrichtung ein Temperaturprofil erzeugt und aufrechterhalten wird, welches im wesentlichen demjenigen Temperaturprofil entlang der Probenmigrationsrichtung im Zentrum des ersten Raumes entspricht.

Zur Beibehaltung einer Temperaturverteilung, die von einer senkrecht zur Probenmigrationsrichtung verlaufenden Koordinate unabhängig ist, wird der erste Raum, und gegebenenfalls der ihn umgebende zweite Raum, gegen einen Wärmefluß senkrecht zur Probenmigrationsrichtung thermisch isoliert.

Ebenso wird im ersten Raum, und gegebenenfalls im diesen umgebenden zweiten Raum, an deren jeweiligen Stirnflächen - bei zylinderförmiger Ausbildung - mit dem Flächennormal in oder gegen die Probenmigrationsrichtung, mittels einer Temperier-Vorrichtung die elektrisch umgesetzte Joule'sche Wärme abgeführt.

Nach dem erfindungsgemäß vorgeschlagenen Elektrophorese-Verfahren sind dem Trennaufbau Elektrodenelemente, die zum Beispiel platten- oder ringförmig konfiguriert sein können, derart zugeordnet, daß bei Anlegen einer elektrischen Spannung an diesen die (elektrisch geladenen) Einzelproben Richtung der Hochachse der Separationsvorrichtung migrieren.

Der zweite Raum kann von einem weiteren Raum umgeben sein oder in mit diesem in Verbindung stehen, in welchem ein Lösungsmittel, wie zum Beispiel ein Elektrolyt oder ein Puffermedium enthalten ist, welches mit den Stirnseiten des im wesentlichen zylinderförmig angeordneten Trennaufbaus in Kontakt steht. Ein Einstellen bzw. Aufrechterhalten gewünschter elektrischer, chemischer, und physikalischer Eigenschaften des Separationsmediums und des die Elektroden umgebenden Lösungsmittels kann dadurch begünstigt werden, daß das im weiteren Raum enthaltene Lösungsmittel, sei es ein Elektrolyt, sei es ein Puffermedium, zwischen den Elektrodenelementen umgewälzt wird. In vorteilhafter Weise kann mit einer Umwälzung eine Wärmeabfuhr über die Stirnflächen des ersten Raumes, sowie gegebenenfalls des zweiten Raumes, verbunden werden. Eine Umwälzung des Puffermediums geschieht in vorteilhafter Weise in radialer Richtung, entweder vom Zentrum in den Peripheriebereich oder entgegengesetzt, und kann mittels einer Umwälzeinrichtung (Pumpe) stattfinden. In vorteilhafter Weise entsprechen die beispielsweise elektrischen Eigenschaften - oder auch andere physikalische und chemische Eigenschaften - des Lösungsmittels denen des im ersten Raum aufgenommenen Separationsmediums. Der weitere Raum kann zur Verbesserung eines Ionenaustausches mit einem externen Reservoir in Verbindung stehen.

Das bei dem erfindungsgemäß vorgeschlagenen Verfahren eingesetzte Separationsmedium ist im Falle der elektrophoretischen Auftrennung innerhalb des ersten Raumes derart aufgenommen, daß sich ein Verhältnis seiner radialen Erstreckung zu seiner Längsausdehnung von > 0,2, vorzugsweise > 0,3, besonders bevorzugt größer >0,5 einstellt.

Das Separationsmedium kann je nach Anwendung sowohl fest, flüssig als auch kolloid vorliegen; es kann sich um ein transparentes oder ein nicht transparentes Separationsmedium handeln. Als Beispiele für Separationsmedien seien Polyacrylamid, Agarose oder auch Hydroxylcellulose genannt. Abhängig vom eingesetzten Separationsmedium ist vorzugsweise ein Medium als Puffermedium einzusetzen, dessen physikalische, elektrische und chemische Eigenschaften denjenigen des ausgewählten Separationsmediums möglichst nahe kommen.

## Probenauftrag

Der Probenauftrag kann durch Einbringen einer zweidimensionalen Schicht (Probenplatte) erfolgen, in oder auf der die Einzelproben im wesentlichen flächenmäßig zweidimensional angeordnet werden. Eine solche Probenplatte zur Aufnahme von Proben kann in die Separationsschicht selbst integriert sein. Die Einzelproben können sich örtlich fixiert in oder auf einem Trägermaterial oder auf im wesentlichen 2-dimensionalen Anordnungen von punktförmigen Erhebungen oder Vertiefungen befinden, z.B. aufgebracht durch Arrays von Pins, Mikroelektroden, Hohlkörpern, Pipetten, Tips. Die eingesetzten Probenplatten umfassen bevorzugt ein poröses Trägermaterial. Die Einzelproben des jeweiligen Probenauftrags können auch zum Beispiel durch elektrische oder magnetische Kräfte auf der Probenplatte lokalisierbar sein. Ebenfalls können die Proben auch direkt auf das Separationsmedium, z.B. in an einer seiner Grenzflächen befindlichen, regelmäßig angeordneten Vertiefungen aufgetragen werden. In diesem Fall stellt ein Teil des Separationsmediums selbst die Probenplatte dar. In der Regel stellen Probenplatten jedoch eigenständige Vorrichtungen zur Handhabung der Proben dar.

An den Einzelproben können vor dem Separationsvorgang chemische Reaktionen oder physikalische Behandlungen oder Messungen vorgenommen werden. Dies geschieht vorzugsweise in oder auf der Probenplatte, oder in einer Vorrichtung, von der die Einzelproben auf die Probenplatte übertragen werden können. Beispielsweise können die Einzelproben aus einzelnen Molekülen oder aus einer Vielzahl gleichartiger Moleküle amplifiziert werden, wozu beispielsweise neben dem PCR-Verfahren auch das Klonen und eine anschließende selektive Vermehrung eingesetzt werden kann. In gleicher Weise lassen sich auch der Separation vorangehende Reaktionen (z.B. DNA-Sequenzierungsreaktionen) durchführen.

Eine zweidimensionale Verteilung der Einzelproben auf der Probenplatte, oder einer Vorrichtung, aus der die Einzelproben auf die Probenplatte übertragen werden können, kann beispielsweise durch einen Cell Sorter oder einen fluoreszenz-aktivierten Cell Sorter (FACS) erfolgen. Die Einzelproben können dazu beispielsweise an oder in Partikeln vorliegen, vorzugsweise in Wirtsorganismen, z.B. Hefen, Bakterien oder sogenannten Kompetenten Zellen. Dabei werden die Partikel, aufgrund jeweils gemessener physikalischer oder chemischer Eigenschaften verteilt. Die physikalischen Eigenschaften können zum Beispiel die Intensität oder Wellenlänge von abgestrahltem Fluoreszenzlicht sein. Die zweidimensionale Verteilung der Einzelproben auf der Probenplatte erfolgt derart, daß der Abstand zwischen benachbarten Einzelproben einen Mindestabstand nicht unterschreiten. Der Mindestabstand ist im wesentlichen abhängig von der Art der Separation und den Proben und muß so gewählt werden, daß die unabhängige Auftrennung und Detektion der Eizelproben gewährleistet ist. Der Verteilung von Partikeln, z.B. Kompetenten Zellen, können Amplifizierungsschritte folgen. Von hoher praktischer Bedeutung ist in diesem Zusammenhang das Aussortieren und Verteilen von Organismen, die einen zu sequenzierenden DNA-Abschnitt (Insert) tragen. Bei konventionellen Sequenzierungstechniken wird aufgrund einer Farbänderung des Organismus auf die Präsenz eines solchen DNA-Abschnittes (Insert) geschlossen. Dazu wird der Organismus durch gezielte Manipulation seiner DNA zur Bildung eines Farbstoffes veranlaßt. In Organismen, die ein Insert tragen, ist durch dieses die Bildung des Farbstoffes gestört. Die Manipulation der DNA des Organismus kann so modifiziert werden, daß der gebildete Farbstoff, z.B. GFP (=Green Fluorescent Protein), bzw. die Farbänderung, von einem Fluoreszenz-Aktivierten Cell Sorter (FACS-Gerät) erfaßt werden kann und somit als Kriterium zur automatischen Sortierung bzw. Verteilung von Organismen auf der Probenplatte dienen kann. Der Probenverteilung aufgrund gemessener Eigenschaften können weitere chemische Reaktionen oder physikalische Behandlungsschritte, z.B. Sequenzierungs-Reaktionen, vorzugsweise in der Probenplatte, folgen.

**Separation nach 3 Parametern**

Die Einzelprobenpräparation des jeweiligen Probenauftrages kann derart erfolgen, daß zunächst in einem im wesentlichen zweidimensionalen Separationsmedium mehrere Proben in paralleler Abarbeitung nach einem Parameter aufgetrennt werden. Das zweidimensionale Trennmedium wird dann, die aufgetrennten Probenfraktionen enthaltend, als Probenplatte mit einer Grenzfläche des dreidimensionalen Separationsmediums in Kontakt gebracht. Die in dem zweidimensionalen Separationsmedium enthaltenen Proben können dann durch Migration in eine Richtung, die im wesentlichen senkrecht zu ihrer ursprünglichen Laufrichtung orientiert ist, in dem dreidimensionalen Separationsmedium nach einem weiteren Parameter aufgetrennt werden. Der Auftrennung durch das zweidimensionale Separationsmedium kann außerdem eine Vorseparation in einem eindimensionalen Separationsmedium vorangestellt werden, so daß mit dem erfindungsgemäß vorgeschlagenen Verfahren eine Auftrennung von Proben nach insgesamt drei unabhängigen Parametern erzielt werden kann. Alternativ können anstelle des zweidimensionalen Separationsmediums mehrere eindimensionale Separationsmedien mit darin enthaltenen, vorseparierten Probenfraktionen in im wesentlichen paralleler Anordnung als Probenplatte mit der Grenzfläche des dreidimensionalen Separationsmediums in Kontakt gebracht werden und die Proben in diesem aufgetrennt werden. Auf diese Weise ermöglicht das erfindungsgemäß vorgeschlagene Verfahren die Auftrennung von Proben nach nur zwei Parametern, jedoch in paralleler Abarbeitungsweise mit hohem Durchsatz. Zwischen den einzelnen Separationsschritten kann jeweils eine Detektion der Proben durch entsprechende Verfahren erfolgen und ergänzend oder alternativ eine chemische oder physikalische Behandlung des Separationsmediums und/oder der Proben erfolgen. Gegebenenfalls können außerdem einzelne Probenfraktionen für weitere analytische oder präparative Schritte aus dem Separationsmedium entnommen werden.

Für die ein- oder zweidimensionale Vorseparation der Einzelproben können z.B. die oben beschriebenen Elektrophoresetechniken unter Verwendung der oben beschriebenen Probenplatten, die zu diesem Zweck ein geeignetes Separationsmedium enthalten, genutzt werden. Dies ist insbesondere von Bedeutung für die als Anwendung vorgeschlagene Auftrennung von Proteingemischen nach drei unabhängigen Parametern (z.B. pH-Wert, Größe, Hydrophobizität bzw. Solubilität) mittels des erfindungsgemäß vorgeschlagenen dreidimensionalen Separationsverfahrens.

**Detektion, Fraktionskollektor**

Zur qualitativen und quantitativen Analyse von Proben kann deren Detektion im Rahmen des erfindungsgemäß vorgeschlagenen dreidimensionalen Separationsverfahrens durch eine Vielzahl verschiedener Techniken erfolgen. Vorzugsweise werden Photodetektionsverfahren eingesetzt. Im einfachsten Falle erfolgt eine Detektion durch einfaches Betrachten.

Eine Kombination von Detektion und präparativem Sammeln der Probenfraktionen ist in vielen Fällen sinnvoll. In Ausnahmefällen erfolgt unter Verzicht auf eine Detektion ausschließlich ein präparatives Sammeln der einzelnen Probenfraktionen.

Für das Sammeln der Probenfraktionen während des Trennvorgangs können zwei Verfahren unterschieden werden:

Die erste Ausführungsvariante sammelt die Probenfraktionen unmittelbar an einer Grenzfläche des Separationsmediums und speichert sie dort in oder auf einem geeigneten Sammelmedium. Vorzugsweise besteht das Sammelmedium aus einer Membran oder einzelnen Probenplatten, die in regelmäßigen zeitlichen Abständen an einer Grenzfläche des Separationsmediums vorbeigeführt werden können. Durch einen regelmäßigen Transport der Sammelmembran aus der Trennvorrichtung, bzw. ein regelmäßiges Auswechseln der Probenplatten, werden die Probenfraktionen je nach Retentionszeit auf verschiedenen Teilflächen der Membran, bzw. auf verschiedenen Probenplatten, abgelegt.

Bei der zweiten Variante werden die Proben durch ein Array aus Kapillaren, Röhren oder Schläuchen aus der Trennvorrichtung herausgeführt und von einem externen Fraktionskollektor gesammelt.

Die Detektion kann während der Proben-Migration (Online-Detektion) oder nach Abschluß der Separation erfolgen. Eine Detektion der Proben während ihrer Migration kann auf ein zweidimensionales Abbildungsverfahren zurückgeführt werden. Dazu werden die Probenfraktionen bei ihrem Durchgang durch einen ausgewählten, zweidimensionalen ebenen Detektionsbereich detektiert. Der im wesentlichen senkrecht zur Migrationsrichtung der Proben orientierte Detektionsbereich liegt vorzugsweise nahe einer Grenzfläche des Separationsmediums; er kann innerhalb oder außerhalb des Separationsmediums liegen. Von diesem im wesentlichen zweidimensionalen Detektionsbereich kann in zeitlichen Intervallen, z.B. durch die im folgenden beschriebenen Detektionseinrichtungen, eine fortlaufende Serie zweidimensionaler Abbildungen aufgenommen und auf geeignete Weise aufgezeichnet werden. Die durch die Separation der Probenfraktionen zwischen ihnen entstehenden räumlichen Distanzen entlang der Migrationsrichtung werden also in zeitliche Abstände ihres Durchganges durch den Detektionsbereich umgesetzt.

Im Falle einer Detektion nach Abschluß des Separationsvorganges ist ein dreidimensionales Abbildungsverfahren erforderlich. Hierzu kann beispielsweise ein stereoskopisches Abbildungsverfahren eingesetzt werden. Alternativ dazu kann ein im wesentlichen zweidimensional definierter Detektionsbereich durch das Separationsmedium, vorzugsweise in Richtung dessen Hochachse (z-Achse), bewegt werden (Scannen). Von diesem Detektionsbereich können, z.B. durch die im folgenden beschriebenen Detektionseinrichtungen, eine Serie zweidimensionaler Abbildungen aufgenommen und auf geeignete Weise aufgezeichnet werden.

Indem das dreidimensionale Separationsmedium nach Abschluß des Separationsvorganges, z.B. durch parallele Schnitte, in Scheiben zerlegt wird, kann jedoch auch im Fall einer Detektion nach Abschluß des Separationsvorganges eine Rückführung auf ein herkömmliches zweidimensionale Abbildungsverfahren erfolgen. Vorzugsweise verlaufen die Schnitte parallel oder senkrecht zur Probenmigrationsrichtung. Die auf diese Weise erhaltenen, im wesentlichen zweidimensionalen Scheiben des Separationsmediums können durch übliche, geeignete 2D-Abtastverfahren abgebildet werden. Eine präparative Isolation von einzelnen Probenfraktionen durch Herauslösen aus den Scheiben ist dann ebenfalls leicht möglich.

**Konfokale Detektion**

Eine bevorzugte Technik zur Online-Detektion ist eine konfokale Detektionseinrichtung, deren Meßkopf als Mehrfach-Meßkopf ausgebildet sein kann. Die konfokale Detektionseinrichtung ist mit einem oder mehreren optischen Systemen versehen, welche so ausgelegt sind, daß die objektseitigen punkt- oder linienförmigen Foci der Illuminations-Strahlengänge mit denjenigen der Detektions-Strahlengänge zusammenfallen. Zur Fokussierung des Illuminationslichtes und Erfassung des von den Proben im Detektionsbereich ausgehenden Lichtes kann ein- und dasselbe oder verschiedene optische Systeme dienen. Im letzeren Fall sind die Strahlengänge der optischen Systeme zur Illumination und Detektion vorzugsweise rechtwinklig zueinander angeordnet. Außerdem kann in diesem Fall der dichroitische Strahlteiler zur Separation der Strahlengänge von Beleuchtungs- und Detektionseinrichtung entfallen.

Durch Wahl einer konfokalen Detektionsanordnung kann durch (Rayleigh-)Streuung im Separationsmedium und im umgebenden Medium verursachte Hintergrundstrahlung reduziert und eine bessere räumliche Auflösung in Richtung der optischen Achse erreicht werden. Mittels eines Mehrfach-Meßkopfes lassen sich größere Flächenbereiche der Querschnittsfläche des ersten Raumes simultan abtasten. Zur Detektion von mit Fluoreszenzfarbstoffen markierten Einzelproben kann der (Mehrfach-)Meßkopf der konfokalen Detektionseinrichtung mit optischen Absorptions- und alternativ oder ergänzend mit Interferenz-Filtern versehen werden.

Zum Bildaufbau kann die Detektionseinrichtung in x, y; r, $\omega$-Richtung in Bezug auf eine Querschnittsfläche des ersten Raumes, welcher das Separationsmedium und die darin aufzutrennenden Einzelproben enthält, verfahren werden (Scannen). Das während des Scannens in der Detektionseinrichtung erzeugte, im allgemeinen elektrische Signal kann dann geeigneten Einrichtungen zur Verstärkung und Aufzeichnung zugeführt werden.

**Punkt-konfokale Detektion**

Gemäß einer weiteren möglichen Ausführungsvariante der konfokalen Detektion kann der Detektionsbereich punktweise beleuchtet werden. In bevorzugter Ausführungsweise wird ein (oder mehrere) monochromatische, kohärente Lichtquellen (z.B. Laser) eingesetzt. Mittels eines dichroitischen Strahlteilers kann der/die Strahl(en) zu einem Objektiv hin umgelenkt werden, welches ihn/sie auf einen Punkt in der Detektionsebene fokussiert. Der/die Strahl(en) kann dabei, um ein Beispiel zu geben, auf fluoreszierende Moleküle treffen, die durch Anregung mit Licht der Laserwellenlänge Fluoreszenzlicht einer anderen, größeren Wellenlänge abstrahlen. Das gleiche oder ein anderes Objektiv erfaßt je nach numerischer Apertur einen Teil des abgestrahlten Lichtes, welches durch den dichroitischen Strahlteiler auf einen Detektor, zum Beispiel einen Photomultiplier, Avalanche-Diode oder eine CCD-Kamera, umgeleitet wird. Je nach Stärke des Lichtsignales wird ein entsprechendes Detektorsignal erzeugt. Die optischen Strahlengänge der Beleuchtungseinrichtung und der Detektionseinrichtung sind so ausgelegt, daß ihre beiden objektseitigen Fokuspunkte im Detektionsbereich (punkt-)konfokal aufeinander liegen. Ein Bildaufbau wird durch ein Bewegen (Scannen) des Meßkopfes in x,y- oder $\omega$,r-Richtung relativ zum Separationsmedium ermöglicht.

**Zylindrisch konfokale Detektion**

Eine vereinfachte Detektionseinrichtung nutzt eine zylindrisch konfokale Anordnung einer Beleuchtungsvorrichtung in Kombination mit einem Zeilendetektor. Die von der Beleuchtungszeile ausgehende Strahlung wird durch ein geeignetes optisches System linienförmig in den Detektionsbereich fokussiert. Die ausgeleuchtete Linie im Detektionsbereich wird durch ein geeignetes optisches System auf die Detektionszeile abgebildet. Als zylindrisch konfokal wird die Anordnung der dem Zeilendetektor und der Beleuchtungsvorrichtung zugeordneten optischen Systeme bezeichnet, wenn die beiden objektseitigen Fokuslinien der zugeordneten optischen Strahlengänge deckungsgleich aufeinander liegen.

Die Ausleuchtung des Detektionsbereiches kann beispielsweise mittels einer zeilenförmigen Anordnung von Leuchtdioden oder Laserdioden bzw. eines entsprechend fächerförmig bewegten oder aufgeweiteten Laserstrahls erfolgen. Durch Ansteuerung der einzelnen Leuchtdioden oder Laserdioden bzw. der Bewegung des Laserstrahls synchronisiert zum Auslesevorgang des Zeilendetektors kann eine Verbesserung des Signal-zu-Rausch-Verhältnisses im Sinne des Mode-Locking-Verfahrens erreicht werden. Das optische System, welches einer zylindrisch konfokalen Kombination aus Illuminations- und Detektionseinrichtung zugeordnet ist, kann ein oder mehrere Gradienten-Index-Linsenfelder, Zylinderlinsen, Mikrolinsenfelder oder eine Kombination dieser optischen Elemente enthalten.

**Gradienten-Index-Linsen**

Bevorzugt werden ein oder mehrere Gradienten-Index-Linsenfelder eingesetzt. Ein solches Linsenfeld (Array) besteht aus einer Vielzahl einzelner, dicht nebeneinander angeordneter Gradienten-Index-Linsen. Gradienten-Index-Linsen zeichnen sich dadurch aus, daß der Brechungsindex innerhalb des zylinderförmigen Linsenkörpers von der Zentralachse nach außen hin kontinuierlich abnimmt. Stirnseitig eintretende Lichtstrahlen werden dadurch innerhalb der Linse sinusförmig abgelenkt. Gradienten-Index-Linsen werden in Durchmessern von etwa 0,1 bis 2 Millimetern gefertigt. Die Länge des zylinderförmigen Linsenkörpers bestimmt die Brennweite bzw. die optischen Abbildungseigenschaften der Linse. Gradienten-Index-Linsen einer bestimmten Länge erzeugen eine aufrechte 1-zu-1-Abbildung. Bei Anordnung mehrerer solcher Linsen zu einem Array überlagern sich die Bilder einzelner Linsen zu einer räumlich kontinuierlichen, aufrechten 1-zu-1-Abbildung beliebiger Ausdehnung. Durch Abbildung des Lichtes einer Leuchtdioden-Zeile, oder vorzugsweise einer Laserdioden-Zeile, mittels eines Gradienten-Index-Linsen-Arrays in den Detektionsbereich kann in diesem ein zeilenförmiger Bereich räumlich selektiv beleuchtet werden. Das gleiche Linsen-Array kann zur räumlich selektiven Abbildung des beleuchteten Bereiches innerhalb des Separationsmediums auf eine zeilenförmige Detektionseinrichtung, z.B. eine CCD- oder Photodioden-Zeile, dienen. In diesem Fall kann das von dem beleuchteten Bereich im Detektionsbereich ausgehende Licht durch einen dichroitischen Strahlteiler wellenlängenspezifisch von dem von der Beleuchtungseinrichtung ausgehenden Licht separiert und der Detektionseinrichtung zugeführt werden. Zusätzlich zum dichroitischen Strahlteiler können weitere optische Absorptions- und Interferenz-Filter zur Verbesserung der spektralen Selektivität der Detektion zum Einsatz kommen.

**Orthogonal zylindrisch konfokale Detektion**

Eine andere Ausführungsvariante der Detektionseinrichtung nutzt eine orthogonal zylindrisch konfokale Anordnung einer zeilenförmigen Beleuchtungsvorrichtung in Kombination mit einem Zeilendetektor. Dazu kann durch Abbildung des Lichtes einer Leuchtdioden-Zeile, oder vorzugsweise einer Laserdioden-Zeile, mittels eines geeigneten optischen Systems, vorzugsweise mittels einer Zylinderlinse, in den Detektionsbereich in diesem ein zeilenförmiger Bereich räumlich selektiv beleuchtet werden. Der beleuchtete Bereich kann durch ein oder zwei Gradienten-Index-Linsen-Array(s) mit gegenüber der optischen Achse der Beleuchtungseinrichtung winklig angeordneter optischer Achse auf die Detektionseinrichtung abgebildet werden. Durch die im wesentlichen rechtwinklige (orthogonal konfokale) Anordnung der optischen Achsen von Illuminations- und Detektions-Einrichtungen kann eine Verringerung der durch (Rayleigh-)Streuung des Illuminations-Lichtes im Separationsmedium verursachten Hintergrundstrahlung erzielt werden und eine bessere räumliche Auflösung in Richtung der z-Achse erreicht werden. Außerdem kann in diesem Fall der dichroitische Strahlteiler zur Separation der Strahlengänge von Beleuchtungs- und Detektionseinrichtung entfallen. Auch bei dieser Ausgestaltung des optischen Systems können optische Absorptions- und Interferenz-Filter zur Verbesserung der spektralen Selektivität der Detektion zum Einsatz kommen. Auch die oben beschriebene Varianten von zylindrisch konfokalen Anordnungen können als Mehrfach-Meßkopf ausgeführt werden, indem mehrere solcher Illuminations- und Detektionszeilen zusammengefaßt werden. Die in einem solchen Mehrfach-Meßkopf zusammengefaßten Illuminations- und Detektionseinheiten können auch zur Aufnahme unterschiedlicher Strahlung, z.B. solcher mit verschiedener Wellenlänge oder Polarisation, individuell ausgelegt werden.

Zum Aufbau eines Bildes werden die oben beschriebenen Illuminations- und Detektionszeilen mit im wesentlichen orthogonal zueinander angeordneten optischen Achsen und konfokal aufeinander liegenden Fokuslinien eindimensional in x- oder $\omega$-Richtung gegenüber dem Separationsmedium verschoben (Scannen).

**Integration Detektor in Elektrode**

Eine punkt-konfokale oder zylindrisch konfokale Detektionseinrichtung kann im Fall der elektrophoretischen Separation in einer der Elektroden, bevorzugt derjenigen Elektrode, auf welche die Proben innerhalb des Separationsmediums des ersten Raumes zuwandern, integriert sein. Beim Scan-Vorgang wird dann die Elektrode zusammen mit dem Detektor bewegt. Dadurch wird die Homogenität des im Separationsmedium aufgebauten elektrischen Feldes - gemittelt über einen oder mehrere Scan-Perioden - nicht durch die Detektionseinrichtung beeinträchtigt. Durch die Anordnung einer konfokalen Detektionseinrichtung oberhalb des Separationsmediums beeinträchtigen im Zuge des Elektrophoresevorganges entstehende Gasblasen oberhalb des ersten Raumes nicht die Abbildung des Fluoreszenzlichtes auf den Detektor.

**Beleuchtung senkrecht zur Migrationsrichtung**

Bei einer weiteren Ausführungsvariante einer Detektionseinrichtung kann eine Beleuchtungseinrichtung so angeordnet sein, daß ihre optische Achse im wesentlichen senkrecht zur Migrationsrichtung der Proben verläuft. Gemäß dieser Anordnung wird durch eine vorzugsweise monochromatische, kohärente Strahlungsquelle, z.B. einen oder mehrere Laser, ein im wesentlichen sich zweidimensional erstreckender, im wesentlichen senkrecht zur Migrationsrichtung der Proben orientierter Detektionsbereich beleuchtet. Dazu kann der/die Lichtstrahl(en) durch ein geeignetes optisches System, beispielsweise durch galvanometrische Umlenkeinrichtungen, rotierende Polygonspiegel oder Zylinderlinsen, fächerförmig ausgelenkt bzw. aufgeteilt werden.

Der Detektionsbereich kann dabei innerhalb des Separationsmediums oder außerhalb des Separationsmediums, vorzugsweise nahe einer seiner Grenzflächen liegen. Im Falle einer Detektion während der Migration der Proben (Online-Detektion) bleibt der Detektionsbereich stationär in Bezug auf das Separationsmedium. Die Probenfraktionen werden dann bei ihrem Durchtritt durch den Detektionsbereich detektiert. Im Falle einer Detektion nach Abschluß der Migration kann der Detektionsbereich zur Bildaufnahme durch das Separationsmedium, vorzugsweise in Richtung dessen Hochachse (z-Achse), verschoben werden (Scannen). Dazu kann das Separationsmedium aus der Trennvorrichtung entnommen werden und einer separaten Detektionsvorrichtung zugeführt werden.

Bevorzugt wird die Polarisationsrichtung des Illuminations-Lichtes so gewählt, daß nur ein minimaler Bruchteil der durch (Rayleigh-)Streuung im Separationsmedium und dem umgebenden Lösungsmittel verursachten Hintergrundstrahlung in Richtung der Detektionseinrichtungen abgestrahlt wird. Die Wellenlänge des Illuminations-Lichtes wird bevorzugt so gewählt, daß eine optimale Fluoreszenz-Anregung der entsprechend markierten Probenfraktionen erreicht wird, sowie die vom Separationsmedium und umgebenden Lösungsmittel ausgehende, durch Eigenfluoreszenz verursachte Störstrahlung minimiert wird. Vorzugsweise werden monochromatische Strahlungsquellen mit hohem Polarisationsgrad, beispielsweise Laser, eingesetzt.

Die Aufnahme der von den Probenfraktionen emittierten Strahlung kann durch eine Detektionseinrichtung erfolgen, deren optische Achse im wesentlichen parallel zur Hochachse des zylinderförmigen Separationskörpers liegt und eine seiner Stirnflächen schneidet. Es wird dann von der Detektionseinrichtung Strahlung aufgefangen, welche stirnseitig aus dem Separationskörper austritt. Die optische Achse der Detektionseinrichtung kann dabei entgegen der Migrationsrichtung, vorzugsweise jedoch in Richtung der Migration der Proben orientiert sein.

Bei relativ langgestreckten Separationskörpem, d.h. solchen mit einem Verhälnis ihrer radialen zu ihrer Längserstreckung von beispielsweise < 1, kann jedoch auch eine Anordnung der Detektionseinrichtung mit im wesentlichen schräg zur Hochachse des Separationskörpers liegender optischer Achse von Vorteil sein. In diesem Fall schneidet die optische Achse des Detektionssystems die Wandfläche des im wesentlichen zylinderförmigen Separationskörpers; sie kann dabei in oder entgegen der Migrationsrichtung orientiert sein. Von der Detektionseinrichtung wird dann Strahlung aufgefangen, die vom Detektionsbereich ausgehend, z.B. durch ein entsprechendes Fenster, durch die rings umgebende Wandfläche des Separationskörpers austritt.

In jedem Fall ist dafür Sorge zu tragen, daß in der Detektionseinrichtung ein optisches System mit hoher numerischer Apertur eingesetzt wird. Die Strahlung aus der Detektionsebene, oder aus einem Teilbereich der Detektionsebene, wird vom optischen System z.B. auf eine hoch auflösende CCD-Kamera zweidimensional abgebildet, welche der Detektionseinrichtung nachgeschaltet ist Wird nur ein Teilbereich der Detektionsebene abgebildet, so kann die Detektionseinrichtung zur Erfassung des gesamten Detektionsbereiches gegenüber diesem entsprechend in x-,y-, oder ω-Richtung verschoben werden (Scannen).

Eine zur Durchführung des erfindungsgemäßen Verfahrens dienende Vorrichtung umfasst einen Separationsaufbau, der mindestens einen Raum enthält, der sich über drei Raumkoordinaten erstreckt und der so beschaffen ist, daß er mit einem Separationsmedium befüllt werden kann. Dem Separationsmedium werden an einer Stirnfläche die aufzutrennenden Proben zugeführt. Der auf diese Weise gebildeten Separations-Anordnung ist eine Detektions-Einrichtung zugeordnet. Alternativ oder zusätzlich zur Detektions-Einrichtung kann eine Vorrichtung zum präparativen Sammeln der einzelnen Probenfraktionen (Fraktionssammler) zugeordnet sein. Um eine Migration der Proben durch das Separationsmedium zu veranlassen, ist die Trennvorrichtung so gestaltet, daß ein elektrisches Feld darin aufgebaut werden kann.

**Elektrophorese-Vorrichtung**

Im Falle des Einsatzes der Vorrichtung zur Elektrophorese sollte die Anordnung einen den ersten Raum umgebenden, konzentrisch zu diesem angeordneten, zweiten Raum mit einer Wärmeisolation enthalten. Der erste Raum sollte ein Radius zu Längenverhältnis R/Z größer als 0,5 aufweisen, um eine gute Abfuhr der bei der Elektrophorese freiwerdenden Joule'schen Wärme durch die Stirnseiten des in ihm enthaltenen Separationsmediums zu gewährleisten. Eine besonders gute Wärmeabfuhr liegt dann vor, wenn das Radius zu Längenverhältnis R/Z bei größer als 1 liegt. Außerdem wächst die Gesamtanzahl der mit der Vorrichtung auftrennbaren Einzelproben quadratisch mit dem Radius des ersten Raumes, der das Separationsmedium enthält.

In bevorzugter Ausgestaltung des erfindungsgemäß vorgeschlagenen elektrophoretischen Trennaufbaues kann der den ersten Raum umgebenden zweite Raum ein Isolationsmedium enthalten, welches der thermischen Isolation des Separationskörpers in radialer Richtung dient. Die Isolation bewirkt die Ausbildung eines von der radialen (r-) Koordinate weitgehend unabhängigen Temperaturprofils im ersten Raum. Die Ausbildung eines von der radialen (r-) Koordinate unabhängigen Temperaturprofils im ersten Raum kann durch eine Temperierung der Raumbegrenzung des ersten Raumes entlang der Migrationsrichtung der Proben (Hochachse oder z-Achse) unterstützt werden. Die Temperierung der Raumbegrenzung kann z.B. elektrisch oder mittels eines Temperiermediums erfolgen.

In bevorzugter Ausgestaltung des Trennaufbaus sind die Stirnseiten des ersten Raumes und gegebenenfalls des zweiten Raumes von Elektroden derart überdeckt, daß sich in dem im ersten Raum aufgenommenen Separationsmedium bei Anlegen einer elektrischen Spannung ein möglichst homogenes elektrisches Feld einstellt. Die Elektrodenelemente sind bevorzugt plattenförmig ausgebildet und enthalten elektrisch leitende Verbindungen, die jeweils auf der Seite der Elektroden angeordnet sind, die dem Separationsmedium abgewandt liegen. Die die Elektroden umgebenden Räume grenzen an das Separationsmedium an. Sie sind so gestaltet, daß sie mit einer Flüssigkeit oder einem Elektrolyten, vorzugsweise einem Puffermedium, aufgefüllt werden können und weiterhin so, daß ein Wärmefluß über die Stirnseiten des Separationsmediums ermöglicht wird. Vorzugsweise ist dort eine Wärmeaustauschvorrichtung vorgesehen. Auf vorteilhafte Weise ist diese mit einer Temperiervorrichtung kombiniert. Als Wärmeaustauschmedium dient vorzugsweise die die Elektroden umgebende Flüssigkeit.

Wird bei der erfindungsgemäß vorgeschlagenen Vorrichtung zur Durchführung des Verfahrens der die Wärmeisolation aufnehmende zweite Raum von einem Reservoir umschlossen, welches mit den die Elektroden umgebenden Räumen in einer einen Austausch ermöglichenden Weise verbunden ist, kann im Falle der Anwendung zur Elektrophorese ein diffusiver Ionenaustausch zwischen den an den anodenseitigen und kathodenseitigen Stirnbereichen des ersten Raumes befindlichen Flüssigkeitsvolumina erzielt werden. Dadurch kann einerseits die Menge des erforderlichen Puffermediums herabgesetzt werden, und andererseits eine Einstellung bzw. Konstanthaltung gewünschter chemischer, physikalischer und elektrischer Eigenschaften des Puffermediums begünstigt werden. In bevorzugter Ausführung erfolgt ein aktiver Austausch des Puffermediums durch eine geeignete Umwälzanlage, z.B. durch eine Pumpe. Dabei kann in besonders vorteilhafter Ausführung eine Thermostatisierung, z.B. durch einen Wärmetauscher, im Zirkulationskreislauf vorgesehen sein, mittels der die an den Stirnseiten des Separationsmediums austretende Joule'sche Wärme abgeführt werden kann.

## Detektionsvorrichtung

Photodetektions-Vorrichtungen können nach Art der Datenaufnahme klassifiziert werden. Es können folgende Vorrichtungen unterschieden werden:

a) Das 3D-Bildaufnahme-System zur Detektion der Probenfraktionen nach Abschluß des Separationsvorganges oder
b) Das Online-Detektions-System zur Detektion der Probenfraktionen während des Separationsvorganges.

Das 3D-Bildaufnahme-System ist so gestaltet, daß bei einer Bildaufnahme jedem Volumenelement des Separationsmediums mindestens ein photometrischer Meßwert zugeordnet werden kann, das heißt jeder Datensatz umfaßt einen Ortsvektor mit 3 Koordinaten, dem mindestens ein photometrischer Meßwert zugeordnet ist.

Das Online-Detektionssystem ist so gestaltet, daß jedem photometrischen Meßwert ein zweidimensionaler Ortsvektor und zusätzlich die Zeit als dritte Koordinate zugeordnet ist. Online-Detektionssysteme sind so gestaltet, daß sie in regelmäßigen zeitlichen Intervallen Meßwerte aus einer stationären Ebene (Detektionsebene), durch die die Probenfraktionen hindurch migrieren, aufnehmen. Die Detektionsebene kann dazu innerhalb des Separationsmediums oder außerhalb nahe einer Grenzfläche des Separationsmediums liegen.

Für die Online-Detektion können wiederum zwei Vorrichtungstypen unterschieden werden:

a) Konfokale Scanner und
b) 2D-Bildaufnahme-Systeme mit orthogonaler Beleuchtungsvorrichtung.

## Konfokale Scanner

Als vorteilhafte Ausführungsvariante konfokaler Scanner kommen punktkonfokale oder zylindrisch konfokale Scanner mit einfachem Meßkopf oder mit Mehrfachmeßkopf in Betracht. Scanner mit Mehrfachmeßkopf bieten den Vorteil, daß zum Auslesen einer gegebenen Fläche kürzere Auslesezeiten nötig sind und der Scan-Vorgang mit geringeren Geschwindigkeiten durchgeführt werden kann. Außerdem können die einzelnen, zu einem Mehrfach-Meßkopf zusammengefaßten Meßköpfe individuell zur Messung von Strahlung mit unterschiedlichen Eigenschaften, z.B. unterschiedlicher Wellenlänge, eingerichtet werden. Bei Betrieb konfokaler Scanner in Verbindung mit elektrophoretischen Trennvorrichtungen ist der Einbau des Meßkopfes in eine der Elektroden besonders vorteilhaft.

## Zylindrisch konfokaler Scanner

Ein besonders einfacher und gleichzeitig vorteilhafter Scanner zeichnet sich durch zylindrisch konfokale Optik aus. Eine solcher Scanner ist gekennzeichnet durch eine zylindrische Beleuchtungsoptik und durch eine oder mehrere vorzugsweise kohärente Strahlungsquellen, z.B. Laser mit Optik zur Strahlaufweitung. Die Beleuchtungsoptik ist so gestaltet, daß die Strahlung der Strahlungsquellen in die Detektionsebene fokussiert wird. Durch die Wahl einer Zylinderoptik, vorzugsweise einer Zylinderlinse, ergibt sich eine beleuchtete Fokuslinie in der Detektionsebene.

Die Detektionsoptik ist so eingerichtet, daß diese Linie auf einen Zeilendetektor abgebildet wird. Die optischen Achsen von Beleuchtungsoptik und Detektionsoptik sind vorteilhaft winklig zueinander orientiert. Vorteilhaft ist auch ein Aufbau unter Verwendung von zwei Beleuchtungseinrichtungen, welche im wesentlichen symmetrisch beidseitig zur Detektionsoptik angeordnet werden. Die Detektionsoptik zeichnet sich durch punktgetreue Abbildungseigenschaften aus. Vorzugsweise werden Anordnungen (Arrays) von Linsen verwendet. Besonders vorteilhaft ist die Verwendung eines Gradientenindex-Linsenarrays.

Optik und Zeilendetektor bilden mechanisch eine Einheit, welche auf einen beweglichen Schlitten montiert ist. Durch eine Antriebsvorrichtung kann der Schlitten entlang einer kartesischen Koordinate bewegt werden oder um eine Achse rotieren. Die Steuerungs- und Auslese-Elektronik für den Zeilendetektor ist synchronisiert mit der Bewegung des Schlittens. Der so gebildeten Scan-Vorrichtung ist ein Datenaufzeichnungsgerät zugeordnet und ein EDV-Gerät zur Datenauswertung.

## Punktkonfokaler Scanner

Punktkonfokale Scanner weisen gegenüber zylindrisch konfokalen Scannern eine bessere Ortsauflösung auf. Von besonderer Bedeutung ist hier die Ortsauflösung in Richtung der optischen Achse (Tiefenschärfe). Elektronische Steuerung, Datenaufzeichnung und Datenauswertung sind bei punktkonfokalen Scannern jedoch aufwendiger., es ist zu berücksichtigen, daß der oben beschriebene mechanische Schlitten in der Weise modifiziert werden muß, daß der punktkonfokale Meßkopf Bewegungen entlang zweier Koordinaten ausführen kann, und damit eine Fläche (Detektionsebene) abtasten kann.

## Orthogonale Beleuchtung

2D-Bildaufnahme-Systeme mit orthogonaler Beleuchtungsvorrichtung für eine Detektionsebene sind durch folgende Merkmale gekennzeichnet:

Sie verfügen über eine Beleuchtungseinrichtung, gebildet durch eine vorzugsweise kohärente Lichtquelle, z.B. einen oder mehrere Laser mit Strahlaufweitungsoptik, die so an der Trennvorrichtung angebracht ist, daß im Separationsmedium oder nahe einer Grenzfläche des Separationsmediums eine Detektionsebene so aufgespannt wird, daß die Probenfragmente durch diese Ebene hindurch migrieren können. Der Beleuchtungsvorrichtung zugeordnet ist ein Detektionssystem, gebildet aus einem Objektiv und einem Detektor, vorzugsweise einer CCD-Kamera. Die Anordnung des Objektivs und des Detektors ist so gewählt, daß eine zweidimensionale Abbildung des Detektionsbereiches auf den Detektor erfolgt. Die Eigenschaften des Objektivs sind so gewählt, daß die Abbildung mit hoher Apertur und gleichzeitig hoher Ortsauflösung erfolgt. Die optische Achse des Objektivs kann im wesentlichen parallel zur Migrationsrichtung der Proben verlaufen. In dieser Anordnung nimmt das Objektiv Strahlung auf, welche stirnseitig aus dem Separationsmedium austritt.

Die optische Achse des Objektivs kann aber auch schräg zur Migrationsrichtung verlaufen. In diesem Fall ist die Detektionsvorrichtung seitlich an der Trennvorrichtung vorgesehen. In diesem Fall ist es empfehlenswert, ein prismenförmiges Fenster zum Separationsraum hin vorzusehen, dessen optische Eigenschaften, insbesondere der Brechungsindex, denen des Separationsmediums ähneln. Bei einem solchen Aufbau kann es vorteilhaft sein, die im Detektionsbereich schräg zur Richtung der Probenmigration, vorzugsweise senkrecht zur optischen Achse des Objektivs, anzuordnen. Dies hat den Vorteil besserer Abbildungseigenschaften, jedoch den Nachteil, daß Differenzen der Probenlaufzeiten aufgrund unterschiedlicher Wege durch das Separationsmedium korrigiert werden müssen.

Die Datenaufzeichnung kann durch ein geeignetes Aufzeichnungsgerät erfolgen, welches in periodischen Intervallen Datensätze, im wesentlichen in Form von zweidimensionalen Bildern, aufnimmt.

Indem an das oben beschriebene 2D-Bildaufnahmesystem ein Translationsmechanismus adaptiert wird, der eine Verschiebung des Detektionsbereiches entlang einer Achse, vorzugsweise der Hochachse, durch das Separationsmedium bewirkt, kann ein 3D-Bildaufnahmegerät zur Detektion von Probenfraktionen nach Beendigung ihrer Separation aufgebaut werden. Das Datenaufnahmegerät ist in diesem Fall mit der Translationsvorrichtung synchronisiert. Das oben beschriebene 3D-Bildaufnahmegerät kann auch unabhängig von der Trennvorrichtung aufgebaut sein. In diesem Fall kann das Separationsmedium nach Abschluß des Separationsvorganges aus der Trennvorrichtung entnommen werden und dem separaten 3D-Bildaufnahmegerät zugeführt werden.

## Präparatives Sammeln einzelner Fraktionen

Alternativ oder vorzugsweise ergänzend zur Probendetektionseinrichtung kann eine Fraktionssammelvorrichtung vorgesehen sein. Besonders vorteilhaft ist es, die Fraktionssammelvorrichtung mit der Probendetektionseinrichtung zu koppeln. Eine solche Kopplung ermöglicht den Austausch und die Zuordnung von Daten, sowie eine einseitige oder gegenseitige Steuerung zwischen den beiden Einheiten.

Es können zwei Ausführungsvarianten unterschieden werden:

Die erste Ausführungsvariante ist gekennzeichnet durch einen Transportmechanismus für Sammelmedien wie Platten, Membranen, Microtiterplatten oder Arrays aus Reagenzröhrchen. Vorzugsweise besteht das Sammelmedium aus einer Membran oder einzelnen Probenplatten. Die Sammelmedien werden durch den Transportmechanismus unmittelbar an einer Grenzfläche des Separationsmediums plaziert, in regelmäßigen Zeitabständen ausgetauscht und aus der Trennvorrichtung herausbefördert. Vorzugsweise wird eine Abrollvorrichtung, ähnlich einem Filmprojektor, benutzt, die eine Membran transportiert. Die Eigenschaften der Membran sind so gewählt, daß die aus dem Separationsmedium austretenden Fraktionen an ihr gebunden werden. Durch den regelmäßigen Transport der Sammelmembran aus der Trennvorrichtung, bzw. ein regelmäßiges Auswechseln der Probenplatten, werden die Probenfraktionen je nach Retentionszeit auf verschiedenen Teilflächen der Membran, bzw. auf verschiedenen Probenplatten, abgelegt.

Die zweite Ausführungsvariante ist gekennzeichnet durch ein Kapillaren-Array oder ein Array aus Hohlkörpern, wie z.B. Röhren oder Schläuchen. Jeweils ein Ende ist als Eintrittsöffnung nahe der Probenaustrittsfläche an der Grenzfläche des Separationsmediums positioniert. Die Austrittsöffnungen befinden sich außerhalb der Trennvorrichtung über einem Fraktionssammelgerät, vorzugsweise einem Sammelgerät für Mikrotiterplatten oder Probenplatten. Der Transport von der Eintrittsöffnung wird bewirkt durch eine Pneumatik, die auf alle Kapillaren gemeinsam, oder auf jede Kapillare einzeln wirkt, oder durch elektrische Kräfte. Das elektrische Feld oder die Pneumatik sind so ausgelegt, daß die Probenfraktionen aus der Trennapparatur herausgeführt und dem Fraktionssammelgerät zugeführt werden.

Zur Bearbeitung und Herstellung von Probenplatten, sowie der Bearbeitung der Oberfläche von Separationskörpern ist eine Formvorrichtung vorgesehen. Das Formteil ist ein plattenförmiges Werkzeug, welches an seiner Oberfläche Erhebungen, bzw. Vertiefungen in vorzugsweise periodisch zweidimensionaler Anordnung besitzt. Das Material der Oberfläche ist vorzugsweise so gewählt, daß es einerseits Formungsprozesse, wie z.B. Polymerisation von beispielsweise Acrylamid, fördert oder zumindest nicht behindert, und andererseits gute Trenneigenschaften besitzt, d.h. daß nur geringe, oder keine Affinität gegenüber den zu formenden Materialien besteht.

## Probenplatten

Probenplatten sind primär dem oben beschriebenen erfindungsgemäßen dreidimensionalen Trennverfahren und der Trennvorrichtung zugeordnet. Allerdings sind ihre Eigenschaften und Verwendungsmöglichkeiten so gestaltet, daß ihre Anwendung auch weitergehend gefaßt werden kann. So sind sie generell nützliche Gebrauchsgegenstände im Bereich Klonierung, wie beschrieben.

Eine wesentliche Funktion von Probeplatten im Rahmen des erfindungsgemäß vorgeschlagenen dreidimensionalen Separationsverfahrens ist das Beladen der Trennvorrichtung. Probenplatten, die bevorzugt im Rahmen der dreidimensionalen Separation verwendet werden, sind dazu in mehrfacher Hinsicht an die beschriebene Trennvorrichtung und an die spezifischen Anwendungen anzupassen.

Eines der Hauptmerkmale von Probenplatten, die im Rahmen der dreidimensionalen Separation verwendet werden, ist, daß ihr Format und ihre Abmessungen im wesentlichen denen der Trennvorrichtung angepasst sind. Da die Trennvorrichtung vorzugsweise zylindrisch aufgebaut ist, ist ein kreisförmiges Format eines der möglichen vorteilhaften Formate. Ein solches Format ist jedoch in üblichen automatischen Laborhandhabungs-Systemen schwer zu handhaben, da diese gewöhnlich an rechteckige Formate angepaßt sind. Als Kompromiss erscheint daher ein quadratisches Format vorteilhaft. Die Abmessungen der Probenpatten sind derart gewählt, daß sie nahe einer (stirnseitigen) Grenzfläche des Separationsmediums angeordnet werden können.

Vorzugsweise wird zum Laden der Trennvorrichtung die die Einzelproben enthaltende Probenplatte nahe einer (stirnseitigen) Grenzfläche des Separationsmediums angeordnet. Die Übertragung der Einzelproben aus der Probenplatte in das Separationsmedium erfolgt durch geeignete physikalische oder chemische Parameter wie z.B. elektrische Kräfte, Druck, Zentrifugalkräfte, Gravitation, osmotische Kräfte, Diffusion oder Kapilarkräfte. Vorzugsweise sind deshalb Probenplatten zumindest teilweise aus porösem Material gefertigt. Das poröse oder permeabel ausgebildete Material ermöglicht elektrische Ströme, Flüssigkeitsströme, Gasströme, einen diffusiven Stoffaustausch etc.. Dabei ist es vorteilhaft, wenn das poröse Material so angeordnet ist, daß ein Materialtransport in oder entgegen zur Flächennormalen ermöglichst wird. Bezüglich seiner Materialeigenschaften wie z.B. der Porengröße und der Saugfähigkeit, kann das poröse Material der Probenplatten vorzugsweise so beschaffen sein, daß es ermöglicht auf ihm Proben örtlich zu fixieren bzw. einzubetten.

Die örtliche Fixierung von Proben kann auch dadurch ermöglicht werden, daß die Probenplatten feste Trennwände, z.B. in Form einer Wabenstruktur oder Vertiefungen in der Oberfläche, aufweisen. Eine örtliche Fixierung kann ebenfalls durch elektrostatische Kräfte mittels Elektroden, oder durch magnetische Fixierung an kleinen Partikeln aus magnetischem Material, ermöglicht werden. Dazu können die Elektroden bzw. Partikel an der Oberfläche der Probenplatten angeordnet sein, bzw. in diese eingelassen sein.

Vorzugsweise sind für Probenplatten auch solche Materialien gewählt, die höheren Temperaturbelastungen, insbesondere Temperaturbelastungen, wie sie beim PCR-Verfahren auftreten, standhalten. Zumindest ist es vorteilhaft, wenn zumindest die Bestandteile der Probenplatte höheren Temperaturen standhalten, welche an einer örtlichen Fixierung der Proben beteiligt sind.

Vorteilhaft bestehen Probenplatten auch aus Materialien, die das Wachstum von Zellen nicht behindern, bzw. die das Wachstum von Zellen selektiv oder auch nicht-selektiv begünstigen können. Dies ist besonders für diejenigen Typen von Probenplatten wichtig, die für das in dieser Patentapplikation beschriebene FACS-gestützte Klonierungs-Verfahren verwendet werden sollen.

Nicht alle als vorteilhaft: dargestellten Spezifikationen lassen sich in einer Ausführung von Probenplatten vereinen. Deshalb ist es vorteilhaft, Probenplatten für ganz spezifische Anwendungen vorzusehen. Beispiele hierfür sind Probenplatten für Zellkultur unter Verwendung von Nährmedien, z.B. Agarose, Probenplatten für das PCR-Verfahren, Probenplatten für Silica-Filtration, Probenplatten für Separationszwecke, die ein geeignetes Separationsmedium, z.B. Agarose oder Polyacrylamid enthalten, oder spezielle Probenplatten für chemische, physikalische oder photometrische Meßzwecke.

**Probentransport/ Austausch**

Die Entnahme oder Zuführung von Stoffen wie z.B. Proben oder Reagenzien aus oder in Probenplatten oder der Ladeschicht eines Separationskörpers kann durch geeignete Ladewerkzeuge erfolgen. Wegen der großen Anzahl der Proben (in der Größenordnung von 10.000 Einzelproben) ist ein solches Werkzeug gekennzeichnet durch eine regelmäßige Anordnung (Array) von Hohlkörpern, Tips, Pins oder Kapillaren, welche eine Vielzahl von Proben gleichzeitig aufnehmen und überführen können.

Auf vorteilhafte Weise ist dieses Array dadurch gekennzeichnet, daß die einzelnen Elemente des Arrays Anschlüsse aufweisen. Diese Anschlüsse sind vorzugsweise pneumatische Anschlüsse oder elektrische Kontakte oder eine Kombination daraus. Die Elemente sind so ausgelegt, daß von ihnen bzw. mit ihrer Hilfe Stoffe aufgenommen oder abgegeben werden können.

Ein anderes Werkzeug zum Befüllen von Probenplatten besteht aus einem Translationsmechanismus für Probenplatten. Der Translationsmechanismus wird gesteuert durch einen Zellsortierer, vorzugsweise ein FACS-Gerät. Das Steuergerät (Zellsortierer, FACS-Gerät) ist durch seinen Aufbau und sein Steuerungsprogramm so ausgelegt, daß Tröpfchen oder Teile eines Flüssigkeitsstroms durch z.B eine Blende in Richtung der Probenplatte gelenkt werden. Die Ansteuerung der mechanischen Translationsvorrichtung zur Bewegung der Probenplatte in einer oder mehreren Koordinaten erfolgt ebenfalls durch das Steuergerät.

Das erfindungsgemäß vorgeschlagene Verfahren und die dafür vorgesehene Vorrichtung eignen sich insbesondere als Instrument zu einer simultan vorzunehmenden Auftrennung einer sehr großen Anzahl von Gemischen von Biomolekülen oder chemischen Substanzen wie z.B. DNA-Fragmente ,Proteine, Blut- oder Blutplasma in einem dreidimensionalen Separationsmedium. Es läßt sich für alle analytischen Techniken einsetzen, welche lediglich eine relativ geringe Trenngenauigkeit verlangen und in denen die genaue Identität der einzelnen Proben nicht von herausragender Bedeutung ist. Die bevorzugte Hauptanwendung des erfindungsgemäß vorgeschlagenen Verfahrens liegt auf dem Feld der dreidimensionalen Elektrophorese. Mittels des erfmdungsgemäß vorgeschlagenen Verfahrens lassen sich in paralleler Abarbeitung mehrere tausend Einzelproben simultan auftrennen, die eine Vielzahl kurzer DNA-Abschnitte (einige 10 bis 100 Basen) enthalten. Dadurch bietet sich der Einsatz des erfindungsgemäß vorgeschlagenen Verfahrens zur Gen-Expressionsanalyse gemäß der SAGE-Technik (Serial Analysis of Gene Expression) an, jedoch unter Vermeidung des bei dieser Technik erforderlichen, aufwendigen Verkettungsschrittes der einzelnen DNA-Abschnitte.

Werden längere Sequenzen der Einzelklone (150 bis 200 bp (Basenpaare)) benötigt, kann das erfindungsgemäß vorgeschlagene Verfahren sowie der dazu geeignete Trennaufbau zur "Shotgun"-Sequenzierung eingesetzt werden. Ein weiteres Anwendungsgebiet des erfindungsgemäß vorgeschlagenen Verfahrens wäre die "DNA-fingerprint"-Technik.

Schließlich liegen ein weitere Anwendungsgebiete des erfindungsgemäß vorgeschlagenen Verfahrens in der Proteinanalyse sowie in der Expressionsanalyse von Biomolekülen. Dabei lassen sich Proteingemische und dergleichen, insbesondere hinsichtlich dreier Parameter auftrennen, die z.B. durch den pH-Wert, die Größe und die Hydrophobizität (bzw. Solubilität) der Biomoleküle gegeben sein können. Weitere Anwendungen sind die Auftrennung von Substanzen, anorganischen oder organischen Molekülen, DNA, RNA, Lipiden, Peptiden, Aminosäuren, die Sequenzanalyse von Nukleinsäuren, Detektion von Punktmutationen, der Einsatz des Separationsmediums 6 bei der Exprimierungsanalyse und Proteinanalyse hinsichtlich mehrerer Parameter wie z.B. pH-Wert, Größe und Hydrophobiezität (bzw. Solubilität) der Einzelproben 29, der Diagnose von Krankheiten und der Analyse metabolischer Produkte.

Zeichnungen

Anhand der Zeichnungen wird das erfindungsgemäß vorgeschlagene Verfahren eingehender erläutert.
Es zeigt:

Figur 1    den prinzipiellen Aufbau einer Auftrennanordnung (Separationsapparatur) mit einem Hohlraum zur Aufnahme eines Separationsmediums mit einer Probenanordnung,

Figur 2    den schematischen Aufbau einer zwischen zwei Elektroden angeordneten (elektrophoretischen) Separationsapparatur mit konzentrischen Räumen zur Aufnahme einer Isolation und eines Puffermediums,

Figur 3     die schematische Wiedergabe einer Separationsapparatur mit beweglichem Meßkopf mit Beleuchtungs- und Detektionseinrichtung in punktkonfokaler Anordnung und im wesentlichen parallel zur Hochachse (z-Achse) verlaufender optischer Achse,

Figur 4     die schematische Wiedergabe einer Separationsapparatur mit beweglichem Meßkopf mit Beleuchtungs- und Detektionseinrichtung in orthogonal zylindrisch konfokaler Anordnung,

Figur 5     die schematische Wiedergabe einer Separationsapparatur mit seitlich angeordneter Beleuchtungseinrichtung und einem stationären Detektor mit im wesentlichen parallel zur Hochachse (z-Achse) verlaufender optischer Achse,

Figur 6     die schematische Wiedergabe einer Separationsapparatur mit seitlich angeordneter Beleuchtungseinrichtung und einem stationären Detektor mit im wesentlichen schräg zur Hochachse (z-Achse) verlaufender optischer Achse und

Figur 7     die sich einstellenden Wärmeübertragungsrichtungen an einer schematisch wiedergegebenen, zwei konzentrische Räume umfassenden elektrophoretischen Separationsapparatur und das sich einstellende Temperaturprofil.

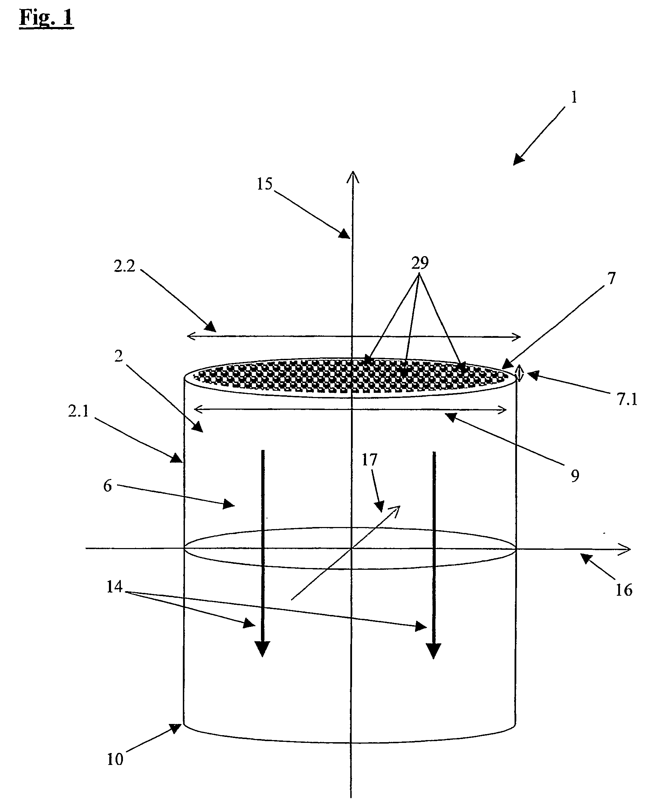

Figur 1 zeigt den prinzipiellen Aufbau einer Separationsapparatur 1 mit einem Hohlraum zur Aufnahme des Separationsmediums 6 und einer Probenplatte 7.

Die in Figur 1 schematisch wiedergegebene Anordnung eines Trennaufbaus 1 umfaßt einen ersten Raum 2, der als Analyseraum dient. Der erste Raum 2 ist vorzugsweise konzentrisch zur mit Bezugzeichen 15 gekennzeichneten Hochachse (z-Achse) angeordnet. Der erste Raum 2 ist durch eine Raumbegrenzung 2.1 umschlossen und von der Umgebung getrennt und so gestaltet, daß er ein Separationsmedium 6 aufnehmen kann. Im ersten Raum 2 ist ein Separationsmedium 6 aufgenommen, welches je nach Anwendung sowohl fest, flüssig als auch kolloid vorliegen kann. Das Separationsmedium 6 kann transparent oder nicht transparent sein; beim Separationsmedium 6 handelt es sich beispielsweise um Polyacrylamid, Agarose oder Hydroxylzellulose.

Der mit 2.2 bezeichnete Radius des ersten Raumes 2 liegt bevorzugt in einem Bereich zwischen 2 und 15 cm, während die Längenerstreckung des ersten Raumes 2 in Richtung der z-Achse 15 im Bereich zwischen 2cm und 30 cm liegen kann.

Im Trennaufbau 1 gemäß der Darstellung in Figur 1 ist oberhalb der oberen Stirnseite der vom ersten Raum 2 mit seiner Raumbegrenzung 2.1 gebildeten Zylinderanordnung 10 eine Probenplatte 7 angeordnet, mit welcher eine Vielzahl von Einzelproben 29 aufgebbar ist. Die Auftragung der Einzelproben 29 erfolgt im wesentlichen zweidimensional, d.h. die Positionen der Einzelproben 29 auf der Probenplatte 7 können im wesentlichen durch zwei (kartesische) Koordinaten, z.B. in Richtung der x-Achse 16 bzw. der y-Achse 17, angegeben werden. Der Abstand der in der Probenplatte 7 aufgenommenen Einzelproben 29 zu den ihnen benachbarten Einzelproben liegt im Bereich von wenigen Millimetern, vorzugsweise unterhalb von 5 mm. Die in Richtung der z-Achse 15 verlaufende axiale Erstreckung 7.1 der Probenplatte 7 ist gering gegenüber der Längserstreckung des ersten Raumes 2, d.h. des Analyseraumes. Die radiale Erstreckung 9 der Probenplatte 7, d.h. ihre Erstreckung senkrecht zur z-Achse 15, entspricht bevorzugt dem Durchmesser 2.2 des ersten Raumes 2.

Unter Einfluß einer physikalischen oder chemischen Größe wandern die Einzelproben in Richtung der Probenmigrationsrichtung 14, die im wesentlichen parallel zur z-Achse 15 (Hochachse) des Trennaufbaus 1 verläuft, durch das im ersten Raum 2 aufgenommene Separationsmedium 6. Die Migration der Einzelproben 29 durch das Separationsmedium 6 läßt sich z.B. über elektrische Kräfte, Graviationskräfte, über Diffusion, Druck- oder Konzentrationsgradienten, über Osmose oder Zentrifugalkräfte herbeiführen.

Der Trennaufbau 1 ist so gestaltet, daß die oben genannten physikalischen oder chemischen Größen einzeln oder in Kombination appliziert werden können.

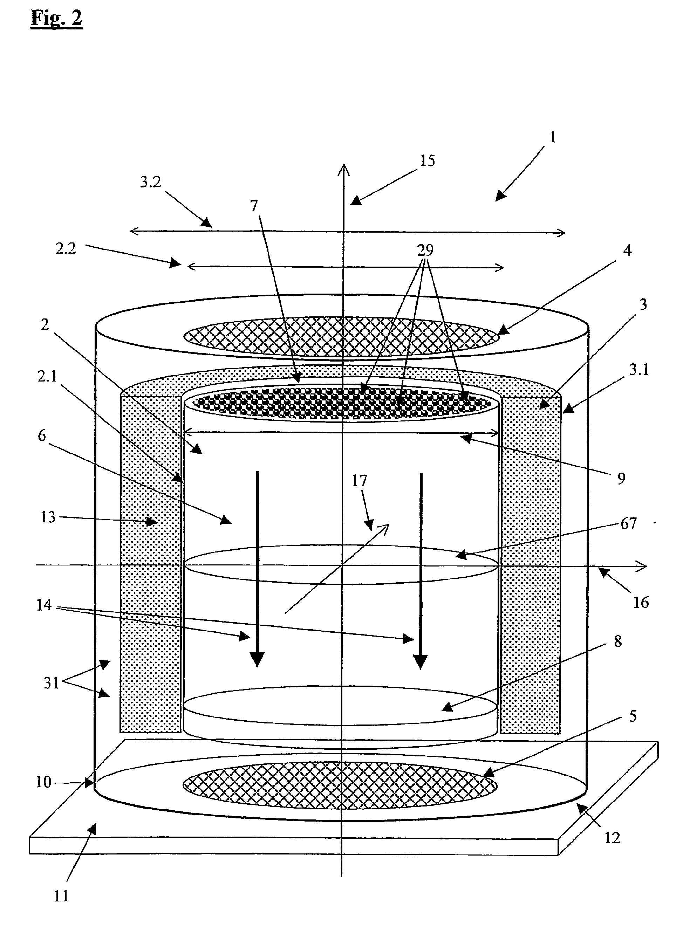

Zur (elektrophoretischen) Separation der Einzelproben 29 mittels elektrischer Kräfte können beispielsweise den Stirnseiten des als Analysehohlraum dienenden ersten Raumes 2 ein erstes Elektrodenelement 4 sowie ein zweites Elektrodenelement 5 zugeordnet sein, welche bevorzugt plattenförmig ausgebildet sind (vgl. Figur 2).

Figur 2 zeigt schematisch den Aufbau einer zwischen zwei Elektrodenelementen 4,5 angeordneten Separationsapparatur 1 mit zwei konzentrisch zueinander aufgenommenen Räumen zur Aufnahme eines Separationsmediums 6 und einer Isolation 13, sowie einem Reservoir zur Aufnahme eines Puffermediums 31. Das Reservoir kann, z.B. wie in Figur 2 schematisch wiedergegeben ist, durch einen konzentrisch aufgenommenen, weiteren Raum 12 gebildet werden.

Die beiden konzentrisch zueinander aufgenommenen Räume 2 bzw. 3 sowie das Reservoir bilden eine Zylinderanordnung 10, die an den Stirnseiten durch die vorzugsweise plattenförmig konfigurierten Elektrodenelemente 4 bzw. 5 begrenzt wird. Die Elektrodenelemente 4 bzw. 5 überdecken die Stirnseiten des als Analysehohlraum dienenden ersten Raumes 2, und gegebenenfalls auch die Stirnseiten des zweiten Raumes 3.

Die Elektrodenelemente 4 bzw. 5 umfassen jeweils elektrisch leitende Verbindungen. Die elektrisch leitenden Verbindungen können beispielsweise ein Geflecht enthalten, welches auf denjenigen Seiten der Elektrodenelemente 4 bzw. 5 aufgenommen ist, die dem ersten Raum 2, d.h. dem das Separationsmedium 6 enthaltenden Raum, zugewandt sind. Das Geflecht kann bevorzugt aus einem korrosionsbeständigen, elektrisch leitendem Material, wie z.B. Platin, gefertigt werden.

Bei Anlegen einer elektrischen Spannung an die Elektrodenelemente 4 bzw. 5 wandern die Einzelproben 29 in Probenmigrationsrichtung 14 vom Elektrodenelement 4 in Richtung auf das Elektrodenelement 5 durch das Separationsmedium 6, wobei sie entsprechend ihrer elektrophoretischen Mobilität aufgetrennt werden.

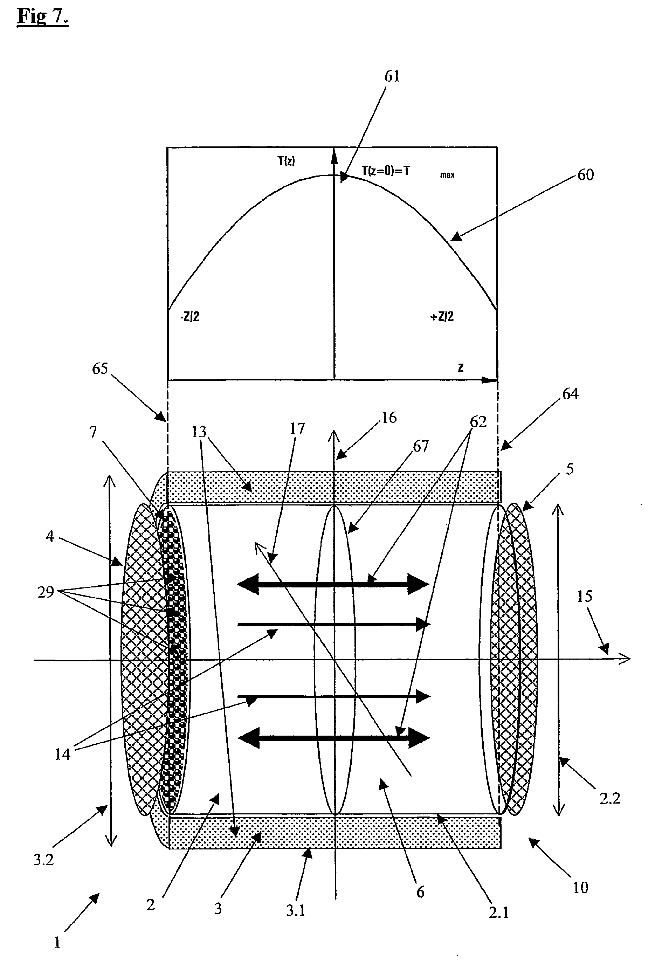

Der den ersten Raum 2 umschließende, konzentrisch zu diesem angeordnete zweite Raum 3 kann rings um die Raumbegrenzung 2.1 des ersten Raumes eine Isolation 13 aufnehmen, welche den radialen Wärmeaustausch senkrecht zur z-Achse 15 unterbindet. Dadurch stellt sich in diesem das Separationsmedium 6 enthaltenden Raum 2 ein von einer radialen (r-)Koordinate unabhängiger Temperaturverlauf mit einem Gradienten ausschließlich in Richtung der z-Achse 15 und einem nur unwesentlichen Temperaturabfall in radialer Richtung ein (vgl. Figur 7). In Folge dessen dissipiert die bei der Elektrophorese erzeugte Joule'sche Wärme gemäß des in Figur 2 schematisch wiedergegebenen Trennaufbaus 1 ausschließlich über die Stirnseiten des ersten Raumes 2. Unter der idealisierenden Annahme eines ausschließlich durch Wärmeleitung stattfindenden Wärmetransports sowie einer homogenen elektrischen Leitfähigkeit des Separationsmediums 6 stellt sich in diesem ein ausschließlich von der z-Koordinate abhängiger Temperaturverlauf ein, der der nachfolgend wiedergegebenen quadratischen Beziehung folgt:

$$ T(z) = T_{max} - az^2 $$

Die Maximaltemperatur $T_{max}$, Bezugszeichen 61, wird im allgemeinen in einer zentralen Ebene 67 in der Mitte der Zylinderanordnung 10, das ist die bei der Koordinate z = 0 liegende, durch die x-Achse 16 und die y-Achse 17 aufgespannte Fläche, vorliegen. Der Umstand, daß im erfindungsgemäß vorgeschlagenen Trennaufbau 1 kein Temperaturgradient in radialer (r-)Richtung auftritt, ist die Voraussetzung dafür, daß sich in radialer Richtung, bezogen auf die Hochachse (z-Achse 15) des ersten Raumes 2, eine isotrope Viskosität des Separationsmediums 6, sowie eine gleichmäßige Ionenmobilität einstellt. Dadurch verlaufen die Migrationsbahnen, entlang denen die Einzelproben 29 in Probenmigrationsrichtung 14 das Separationsmedium 6 durchwandern, im wesentlichen parallel zur z-Achse 15 ohne radiale Abweichungen.

Der zweite Raum 3 kann darüber hinaus mit einem Reservoir in Verbindung stehen, welches diesen als weiteren Raum 12 in konzentrischer Anordnung umgeben kann. Zwischen dem Reservoir 12 und dem zweiten Raum 3 kann über eine geeignete Verbindung ein Austausch des Puffermediums 31 erfolgen, der die Einstellung bzw. Aufrechterhaltung der elektrischen, physikalischen und chemischen Eigenschaften des im zweiten Raum 3 enthaltenen Puffermediums 31 unterstützt. Außerdem kann das Puffermedium 31 bei der Einstellung bzw. Aufrechterhaltung der physikalischen, chemischen und elektrischen Eigenschaften im ersten Raum 2 enthaltenen Separationsmediums 6 unterstützend wirken.

Vorzugsweise kann das (im allgemeinen als flüssige Lösung vorliegende) Puffermedium 31 zur Abfuhr der im Zuge des elektrophoretischen Separationsvorganges freiwerdenden Joule'schen Wärme mittels einer im oder am Reservoir vorgesehenen Thermostatisiervorrichtung dienen.

Der Austausch des Puffermediums 31 zwischen dem zweiten Raum 3 und dem Reservoir kann durch eine Umwälzeinrichtung, z.B. eine Pumpe, unterstützt werden.

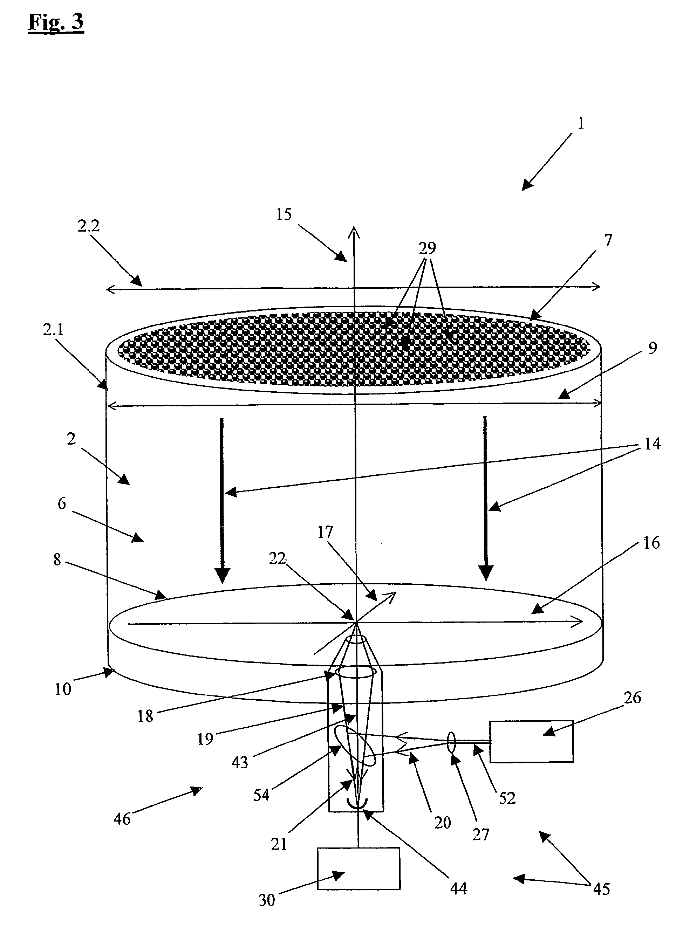

Figur 3 zeigt in schematischer Wiedergabe eine Separationsapparatur 1 mit zugeordneter (Online-)Detektionseinrichtung 45 mit beweglichem Meßkopf 46 mit im wesentlichen parallel zur z-Achse 15 verlaufender optischer Achse 43 und punktkonfokaler Anordnung von Beleuchtungs- und Detektionsvorrichtung.

Bei der in Figur 3 schematisch dargestellten Detektionseinrichtung 45 handelt es sich um eine punktkonfokale Detektionseinrichtung, die die von einem im Detektionsbereich 8 gelegenen Fokuspunkt 22 ausgehende, stirnseitig aus der Zylinderanordnung 10 austretende Strahlung detektiert. Zur Abtastung der gesamten Fläche des Detektionsbereiches 8 des ersten Raumes 2 kann die Detektionseinrichtung 45 in Richtung der x-Achse 16 sowie in Richtung der y-Achse 17 verschiebbar sein.

Die dem Meßkopf 46 zugeordnete Beleuchtungsvorrichtung umfaßt eine vorzugsweise monochromatische, kohärente Strahlungsquelle 26, z.B. einen Laser, sowie eine Optik zu dessen Einkoppelung in den Meßkopf 46. Der Verlauf der von der Strahlungsquelle 26 ausgehenden Strahlung wird in Figur 3 durch den Illuminations-Strahlengang 20 angedeutet. Der hier beispielhaft dargestellte Laserstrahl 52 kann z.B. durch eine Linse 27 aufgefächert werden und trifft dann auf einen dichroitischen Strahlteiler 54, der ihn in Richtung einer Optik 18 umlenkt. Die Optik 18 ist so gestaltet, daß sie die Illuminations-Strahlung 20 mit hoher Numerischer Apertur auf dem in dem Detektionsbereich 8 gelegenen Fokuspunkt 22 bündelt und gleichzeitig einen maximalen Anteil der von den im Fokuspunkt 22 befindlichen Probenfraktionen ausgehenden Strahlung erfaßt und auf den Detektor 44 bündelt. Durch den im Strahlengang 19 eingefügten dichroitischen Strahlteiler 54 wird die von den im Fokuspunkt 22 befindlichen Probenfraktionen ausgehende Strahlung wellenlängenabhängig von der Illuminations-Strahlung 20 getrennt und dem Detektions-Strahlengang 21 folgend dem Detektor 44 zugeführt. Der Detektor 44 produziert ein der aufgenommenen Strahlung entsprechendes, i.a. elektrisches Signal, welches an eine Datenaufnahmeeinheit 30 übertragen werden kann.

Mittels der Detektionseinrichtung 45 können z.B. optische Eigenschaften, vorzugsweise die Fluoreszenz-Intensität oder -Wellenlänge oder das Absorptions- oder Transmissionsvermögen der Einzelproben 29 ermittelt werden. Die in der Probenplatte 7 enthaltenen Einzelproben 29 können zur Unterstützung der Detektion mit Markierungsstoffen, z.B. mit fluoreszenten Farbstoffen, versehen werden.

Der Vorteil der in Figur 3 schematisch wiedergegebenen Detektionseinrichtung 45 in punktkonfokaler Anordnung ist in ihrem hohen räumlichen Auflösungsvermögen, insbesondere in ihrem Auflösungsvermögen in Richtung der x-Achse 16 und der y-Achse 17, zu sehen. Ein Nachteil der punktkonfokalen Anordnung ist, daß jeweils nur von einem Fokuspunkt 22 ausgehende Strahlung zum Detektor 44 gelangt, so daß zur Abtastung (Scannen) der gesamten Detektionsebene 8 die Detektionseinrichtung 45 in Richtung zweier Koordinaten, z.B. in Richtung der x-Achse 16 sowie in Richtung der y-Achse 17, verschoben werden muß.

In der Detektionseinrichtung 45 können mehrere, im wesentlichen gleichartige konfokale Meßköpfe 46 zu einem Mehrfach-Meßkopf zusammengefaßt werden. Dadurch kann von mehreren in der Detektionsebene 8 liegenden Fokuspunkten 22 ausgehende Strahlung gleichzeitig aufgenommen werden. Dies verringert die Weglänge, um die die Detektionseinrichtung 45 verschoben werden muß, damit sie beim Abtastvorgang (Scannen) die gesamte Detektionsebene 8 erfassen kann.

Im Falle der Auftrennung der Einzelproben 29 durch elektrische Kräfte (elektrophoretische Separationsapparatur, vgl. Figur 2) kann der Meßkopf 46 bzw. der Mehrfach-Meßkopf der Detektionseinrichtung 45 in eines der beiden Elektrodenelemente 4 bzw. 5 integriert sein. In diesem Fall wird das Elektrodenelement 4,5 vom Meßkopf 46 bei seiner Abtastbewegung mitgeführt. Dadurch ergibt sich, über lange Zeiten gemittelt, innerhalb des Separationsmediums 6 ein homogenes elektrisches Feld, welches nicht vom Meßkopf 46 verzerrt wird. Dies ist unter anderem Voraussetzung für eine Migration der Einzelproben 29 entlang der Probenmigrationsrichtung 14 im wesentlichen parallel zur z-Achse 15.

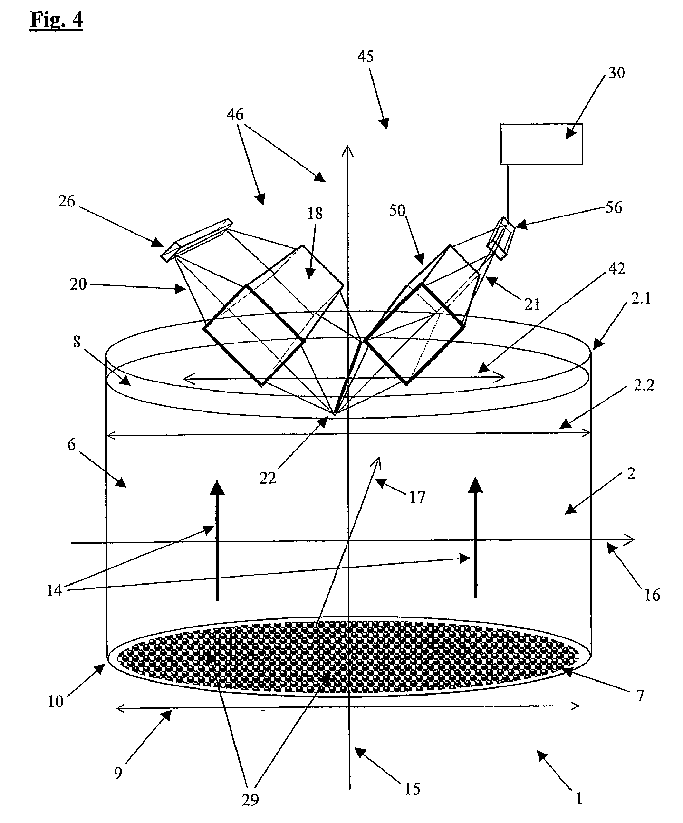

Figur 4 zeigt in schematischer Wiedergabe einer Separationsapparatur mit zugeordneter, oben liegender (Online-)Detektionseinrichtung 45 mit einem Meßkopf 46 mit orthogonal zylindrisch konfokaler Anordnung von Beleuchtungs- und Detektionsvorrichtung.

Im Gegensatz zu der in Figur 3 wiedergegebenen Anordnung mit unten liegender Detektionseinrichtung 45 ist die dem in Figur 4 wiedergegebenen Trennaufbau 1 zugeordnete Detektionseinrichtung 45 oberhalb der Zylinderanordnung 10 vorgesehen. Die Probenplatte 7 ist am entgegengesetzten stirnseitigen Ende der Zylinderanordnung 10 vorgesehen; von der Probenplatte 7 ausgehend, wandern die Einzelproben 29 in Probenmigrationsrichtung 14 durch das Separationsmedium 6. Der Vorteil der in Figur 4 wiedergegebenen Anordnung eines Trennaufbaus 1 mit oben liegender Detektionseinrichtung 45 ist darin zu erblicken, daß die bei seiner Verwendung zur elektrophoretischen Trennung am oberen Elektrodenelement 4 (vgl. Figur 2) entstehenden Gasblasen, die ansonsten die Detektion beeinträchtigen können, sich nicht zwischen dem Detektionsbereich 8 und der Detektionseinrichtung 45 ansammeln, sondern seitlich aufsteigen können.

Bei der in Figur 4 schematisch dargestellten Detektionseinrichtung 45 handelt es sich um eine zylindrisch konfokale Anordnung, die die von einer im Detektionsbereich 8 gelegenen Fokuslinie 22 ausgehende, stirnseitig aus der Zylinderanordnung 10 austretende Strahlung detektiert. Zur Abtastung der gesamten Fläche des Detektionsbereiches 8 des ersten Raumes 2 muß die Detektionseinrichtung 45 in Richtung von nur einer Koordinate, im Beispiel von Figur 4 entlang der Verschiebungsrichtung 42 parallel zur x-Achse 16, verschiebbar sein.

Die dem Meßkopf 46 zugeordnete Beleuchtungsvorrichtung umfaßt eine vorzugsweise monochromatische, kohärente Strahlungsquelle 26, die z.B. als lineare Anordnung (Array) von Laserdioden ausgeführt sein kann, sowie eine geeignete Optik 18 zur Fokussierung der Strahlung auf die Fokuslinie 22. Die Optik 18 enthält eine Anordnung von Zylinderlinsen, Mikrolinsen, oder Gradienten-Index-Linsen oder eine Kombination obiger Elemente und ist so gestaltet, daß sie die von der Strahlungsquelle 26 ausgehende Illuminations-Strahlung mit hoher Numerischer Apertur auf die in der Detektionsebene 8 gelegene Fokuslinie 22 bündelt.

Der Verlauf der von der Strahlungsquelle 26 ausgehenden Strahlung wird in Figur 4 durch den Illuminations-Strahlengang 20 angedeutet. Die optische Achse des Illuminations-Strahlenganges 20 und des Detektions-Strahlenganges 21 liegen schräg, vorzugsweise rechtwinklig (orthogonal), zueinander und kreuzen sich auf der Fokuslinie 22 im Detektionsbereich 8. Alternativ zu einer einzelnen Beleuchtungsvorrichtung, wie sie in Figur 4 schematisch dargestellt ist, können der Detektionseinrichtung 45 auch zwei oder mehr Beleuchtungsvorrichtungen zugeordnet sein. Die optischen Achsen der Illuminations-Strahlengänge 20 aller vorgesehenen Beleuchtungsvorrichtungen und der Detektions-Strahlengang 21 schneiden sich in der Fokuslinie 22.

Durch eine geeignete Optik, im Beispiel der Figur 4 ein Gradienten-Index-Linsenfeld 50, wird die von den in der Fokuslinie 22 befindlichen Probenfraktionen ausgehende Strahlung auf ein Detektorfeld 56 gebündelt. Die Eigenschaften der Optik sind so gewählt, daß die Abbildung der in der Fokuslinie 22 befindlichen Probenfraktionen auf das Detektorfeld 56 mit hoher Numerischer Apertur und hoher räumlicher Trennschärfe erfolgt. Im Detektions-Strahlengang 21 können, z.B. zur Erhöhung der spektralen Trennschärfe bei wellenlängenabhängiger Detektion, zusätzlich optische Absorptions- oder Interferenzfilter vorgesehen sein. Als Detektorfeld 56 ist eine zeilenförmige Anordnung von Einzeldetektoren, z.B. Photodioden, vorgesehen. Das Detektorfeld 56 erzeugt ein der eintreffenden Strahlung entsprechendes, im allgemeinen elektrisches Signal, welches einer Datenaufnahmeeinheit 30 zugeführt werden kann.

Der Vorteil der in Figur 4 schematisch wiedergegebenen Detektionseinrichtung 45 in orthogonal zylindrisch konfokaler Ausführung ist in ihrem hohen räumlichen Auflösungsvermögen, insbesondere in ihrem Auflösungsvermögen (Tiefenschärfe) in Richtung der z-Achse 15, zu sehen. Ein weiterer Vorteil der zylindrisch konfokalen Anordnung ist, daß jeweils von einer Fokuslinie 22 ausgehende Strahlung zum Detektorfeld 56 gelangt, so daß zur Abtastung (Scannen) des gesamten Detektionsbereiches 8 die Detektionseinrichtung 45 in Richtung von nur einer Koordinate, im Beispiel von Figur 4 in Richtung der x-Achse 16, verschoben werden muß. Die Verschiebungsrichtung 42 der Detektionseinrichtung 45 liegt, wie in Figur 4 angedeutet, vorzugsweise rechtwinklig zur Fokuslinie 22.

In der Detektionseinrichtung 45 können auch mehrere, im wesentlichen gleichartige zylindrisch konfokale Meßköpfe 46 zu einem Mehrfach-Meßkopf zusammengefaßt werden. Dadurch kann von mehreren im Detektionsbereich 8 liegenden Fokuslinien 22 ausgehende Strahlung gleichzeitig aufgenommen werden. Dies verringert die Weglänge, um die die Detektionseinrichtung 45 verschoben werden muß, damit sie beim Abtastvorgang (Scannen) den gesamten Detektionsbereich 8 erfassen kann.

Im Falle der Auftrennung der Einzelproben 29 durch elektrische Kräfte (elektrophoretische Separationsapparatur, vgl. Figur 2) kann analog zum punktkonfokalen Meßkopf (vgl. Figur 3) auch der zylindrisch konfokale Meßkopf bzw. der Mehrfach-Meßkopf der Detektionseinrichtung 45 in eines der beiden Elektrodenelemente 4 bzw. 5 integriert sein. In diesem Fall wird das Elektrodenelement 4,5 vom Meßkopf 46 bei seiner Abtastbewegung mitgeführt. Dadurch ergibt sich, über lange Zeiten gemittelt, innerhalb des Separationsmediums 6 ein homogenes elektrisches Feld, welches nicht vom Meßkopf 46 beeinträchtigt wird. Dies ist unter anderem Voraussetzung für eine Migration der Einzelproben 29 entlang der Probenmigrationsrichtung 14 im wesentlichen parallel zur z-Achse 15.

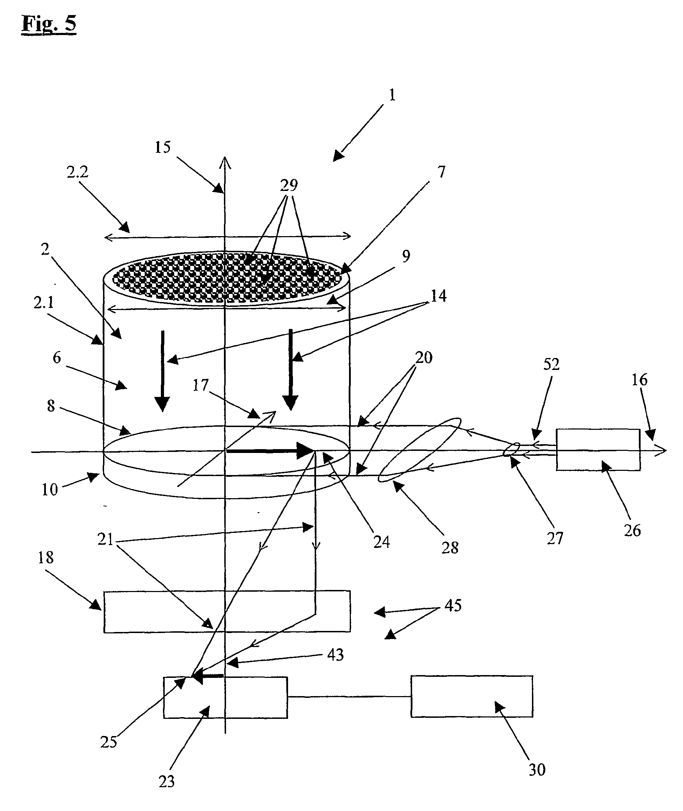

Figur 5 zeigt die schematische Wiedergabe einer Separationsapparatur 1 mit einer seitlich angeordneten Beleuchtungseinrichtung und einem stationären Detektor zur zweidimensionalen Bildaufnahme, dessen optische Achse 43 im wesentlichen parallel zur Hochachse (z-Achse 15) der Zylinderanordnung 10 orientiert ist.

Seitlich zur Zylinderanordnung 10, d.h. in im wesentlichen radialer (r-)Richtung zu deren Hochachse (z-Achse 15), kann eine Beleuchtungseinrichtung angeordnet sein. Von einer dieser Beleuchtungseinrichtung zugeordneten Strahlungsquelle 26 ausgehende Strahlung fällt auf eine die Strahlung auffächernde Vorrichtung, z.B. eine Linse 27, wird durch eine Linse 28 kollimiert und durchtritt die Zylinderanordnung 10 im wesentlichen senkrecht zur z-Achse 15. Durch den in Richtung der y-Achse 17 aufgefächerten Strahl wird ein Detektionsbereich 8 ausgeleuchtet, der im Beispiel der Figur 5 innerhalb des Separationsmediums 6 nahe seiner stirnseitigen, der Probenplatte 7 abgewandten Grenzfläche liegt. Alternativ zu einem durch die Linsen 27,28 gebildeten zylindrischen optischen System kann der im Beispiel der Figur 5 zur Illumination dienende Laserstrahl 52 auch mittels galvanometrischer Umlenkeinrichtungen oder rotierender Polygonspiegel aufgefächert werden.

Um die im allgemeinen auftretende optische Beugung der Illuminations-Strahlung beim Durchgang durch das Separationsmedium 6 zu unterdrücken, kann im Falle der Auftrennung mittels elektrischer Kräfte (elektrophoretische Separationsapparatur, vgl. Figur 2) das im zweiten Raum 3 aufgenommene Puffermedium 31 in seinen chemischen Eigenschaften, z.B. der Konzentration von in ihm gelösten Stoffen, den Eigenschaften des im ersten Raum 2 aufgenommenen Separationsmediums 6 vorteilhafterweise angeglichen werden.

Auf einer Stirnseite der Zylinderanordnung 10, vorzugsweise der der Probenplatte 7 abgewandten Stirnseite, kann eine Detektionseinrichtung 45 aufgenommen werden. Die optische Achse 43 der Detektionseinrichtung 45 liegt im wesentlichen parallel zur Hochachse (z-Achse 15) der Zylinderanordnung 10. In dieser Anordnung nimmt die Detektionseinrichtung 45 stirnseitig aus dem ersten Raum 2, d.h. dem Analysenraum austretende Strahlung auf.

Wie der schematischen Darstellung des Trennaufbaus 1 gemäß Figur 5 darüber hinaus entnehmbar ist, kann an einer Stirnseite der Zylinderanordnung 10 eine Optik 18 angeordnet sein. Die Abbildungseigenschaften der Optik 18 sind so gewählt, daß eine zweidimensionale Abbildung der innerhalb des Detektionsbereiches 8 liegenden Bildebene 24 auf die in der Bildaufnahmeeinheit 23 liegende Abbildungsebene 25 mit hoher räumlicher Auflösung und hoher Numerischer Apertur erfolgt. Gemäß des in Figur 5 eingezeichneten Detektions-Strahlenganges 21 wird ein in der Bildebene 24 liegender Punkt durch die Optik 18 in die Abbildungsebene 25 an der Vorderseite der Bildaufnahmeeinheit 23 scharf abgebildet.

Wenn die Bildebene 24 nur einen Teilbereich des Detektionsbereiches 8 abdeckt, so kann die Detektionseinrichtung 45 relativ zur Zylinderanordnung 10 in ein oder zwei Koordinatenrichtungen, z.B. in Richtung der x-Achse 16 und in Richtung der y-Achse 17 verschoben werden, um den gesamten Detektionsbereich 8 abzutasten (scannen).

Die Bildaufnahmeeinheit 23, z.B. eine hochauflösende CCD-Kamera, erzeugt ein der auftreffenden Strahlung entsprechendes, im allgemeinen elektrisches Signal, welches an eine Datenaufnahmeeinheit 30 übertragen werden kann.

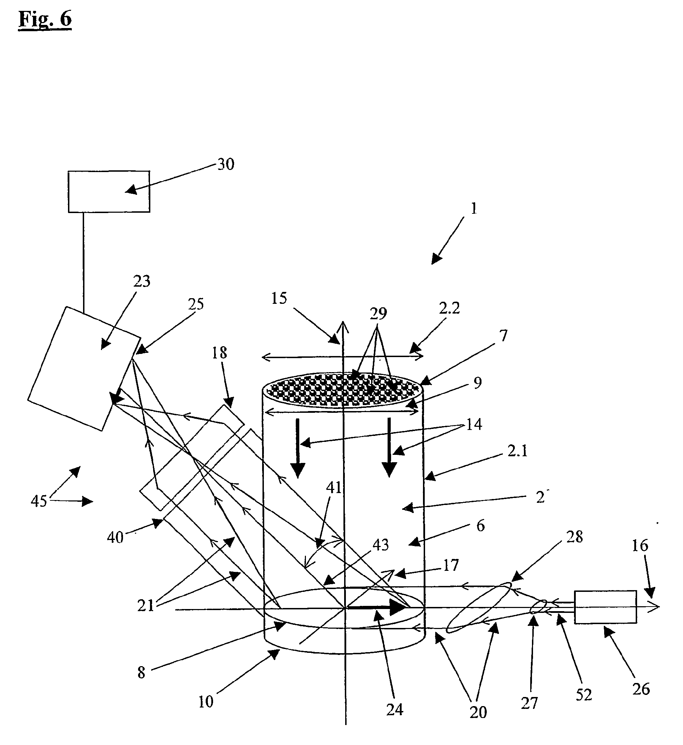

Figur 6 zeigt die schematische Wiedergabe einer Separationsapparatur 1 mit seitlich angeordneter Beleuchtungseinrichtung und einer stationären Detektionseinrichtung 45 mit im wesentlichen schräg zur Hochachse (z-Achse 15) verlaufender optischer Achse 43.

Im Gegensatz zu der Darstellung in Figur 5 ist bei der in Figur 6 schematisch wiedergegebenen Separationsapparatur 1 die Detektionseinrichtung 45 mit zugeordneter Bildaufnahmeeinheit 23 und Optik 18 seitlich zur Zylinderanordnung 10 angeordnet, so daß ihre optische Achse 43 zur z-Achse 15 der Zylinderanordnung 10 um den Schrägstellungswinkel 41 geneigt ist. Die Detektionseinrichtung 45 nimmt bei dieser Anordnung Strahlung auf, welche aus der Zylinderanordnung 10 in wesentlichen seitlich durch ein geeignetes Fenster 40 austritt.

Analog zur Darstellung der Separationsapparatur in Figur 5 ist die Strahlungsquelle 26 mit dieser nachgeschalteten auffächernden Linse 27 und einer Sammellinse 28 nach wie vor im wesentlichen seitlich der Zylinderanordnung 10 vorgesehen. Die von der Beleuchtungseinrichtung durch im wesentlichen seitlich in die Zylinderanordnung 10 einfallende Strahlung illuminierte, ebene Detektionsbereich 8 liegt analog zur Darstellung gemäß Figur 5 im wesentlichen senkrecht zur z-Achse 15 orientiert.

Seitlich außerhalb der Raumbegrenzung 2.1 des ersten Raumes 2 ist eine Bildaufnahmeeinheit 23 mit einer ihr zugeordneten Optik 18 vorgesehen. Die Abbildungseigenschaften der Optik 18 sind so gewählt, daß eine zweidimensionale Abbildung der innerhalb des Detektionsbereiches 8 liegenden Bildebene 24 auf die in der Bildaufnahmeeinheit 23 liegende Abbildungsebene 25 mit hoher räumlicher Auflösung und hoher Numerischer Apertur erfolgt. Gemäß des in Figur 6 eingezeichneten Detektions-Strahlenganges 21 bildet die Optik 18 einen in der Bildebene 24 liegenden Punkt durch das Fenster 40 in die Abbildungsebene 25 an der Vorderseite der Bildaufnahmeeinheit 23 scharf ab.

Wenn die Bildebene 24 nur einen Teilbereich des Detektionsbereiches 8 abdeckt, so kann die Detektionseinrichtung 45 relativ zur Zylinderanordnung 10 verschoben werden, um die gesamte Detektionsebene 8 abzutasten (scannen).

Die Bildaufnahmeeinheit 23, z.B. eine hochauflösende CCD-Kamera, erzeugt ein der auftreffenden Strahlung entsprechendes, im allgemeinen elektrisches Signal, welches an eine Datenaufnahmeeinheit 30 übertragen werden kann.

Die in Figur 6 schematisch dargestellte Anordnung der Detektionseinrichtung 45 seitlich der Zylinderanordnung 10 kann vorzugsweise zur Detektion von Proben nach Abschluß des Separationsvorganges eingesetzt werden. Dazu wird der erste Raum 2, das Separationsmedium 6 und die aufgetrennten Probenfraktionen enthaltend, nach Abschluß des Separationsvorganges relativ zum Detektionsbereich 8, vorzugsweise in Probenmigrationsrichtung 14, verschoben. Synchron dazu kann die Detektionseinrichtung 45 eine Serie von zweidimensionalen Einzelbildern aufnehmen, die durch die Datenaufzeichnungseinheit 30 aufgezeichnet werden.

Figur 7 zeigt die sich einstellenden Wärmetransportrichtungen 62 an einer schematisch wiedergegebenen, zwei konzentrische Räume umfassenden elektrophoretischen Separationsapparatur (vgl. Figur 2) und das sich daraus ergebende, entlang der z-Achse 15 der Anordnung vorherrschende Temperaturprofil 60.

Der erste Raum 2 ist von einem weiteren, konzentrisch zu diesem angeordneten zweiten Raum 3 umschlossen und bildet mit diesem eine Zylinderanordnung 10. Die Begrenzung 2.1 des ersten Raums 2 ist durch die parallel zur z-Achse 15 verlaufende Linie angedeutet. Der zweite Raum 3 kann eine Isolation 13 aufnehmen, so daß kein Wärmeaustausch in radialer Richtung zwischen dem das Separationsmedium 6 aufnehmenden ersten Raum 2 und der Umgebung möglich ist. Die Räume 2 bzw. 3 werden von plattenförmig konfigurierten Elektrodenelementen 4 bzw. 5 an ihren jeweiligen Stirnseiten begrenzt. An den plattenförmig konfigurierten Elektrodenelementen 4 bzw. 5 sind elektrisch leitende Verbindungen enthalten, um eine Spannung zwischen den Elektrodenelementen 4 bzw. 5 anzulegen, welche eine Wanderung der Einzelproben 29 aus der Probenplatte 7 in Probenmigrationsrichtung 14 im wesentlichen parallel zur z-Achse 15 hervorruft. Die im Zuge des elektrophoretischen Separationsvorganges entstehende Joule'sche Wärme dissipiert idealerweise ausschließlich über die stirnseitigen Flächen des ersten Raumes 2 in die Umgebung, so daß sich aufgrund des fehlenden Temperaturgradienten in radialer Richtung eine durch die in Figur 7 eingezeichneten Doppelpfeile dargestellte Wärmetransportrichtung 62 von der zentralen Ebene 67 ausgehend auf die Elektrodenelemente 4 bzw. 5 zu einstellt. Im Inneren des ersten Raumes 2 bildet sich dadurch ein in Figur 7 wiedergegebenes Temperaturprofil 60 aus, welches durch einen lediglich in Richtung der z-Achse 15 vorherrschenden Temperaturgradienten charakterisiert ist. Der Verlauf dieses für die erfindungsgemäß vorgeschlagene elektrophoretische Separationsapparatur charakteristischen Temperaturprofils soll im folgenden kurz hergeleitet werden:

Die elektrische Leistungsdichte p innerhalb des elektrophoretischen Trennaufbaus 1 (Separationsapparatur) ist durch das Skalarprodukt des elektrischen Feldvektors E und des Stromdichtevektors j gegeben:

$$\mathbf{p} \;=\; \vec{E} \bullet \vec{j} \;=\; [\mathrm{W/m^3}].$$

Im Falle einer idealen thermischen Isolierung in radialer Richtung und einer homogenen elektrischen Leitfähigkeit des Separationsmediums 6, stellt sich ein Wärmetransport nur in Richtung der Wärmetransportrichtung 62 im wesentlichen parallel zur z-Achse 15 des Trennaufbaus 1 ein. In diesem Falle hängt der Wärmeflußdichte q lediglich von der z-Koordinate und der elektrischen Leistungsdichte p (betrachtet im stationären Zustand) ab und wird durch das nachfolgend wiedergegebene Integral über die z-Achse 15 beschrieben:

$$\vec{q}(z) \;=\; \vec{e}_z \bullet \int_0^{\bar{z}} \dot{E}(z') \bullet \dot{j}(z')\, dz'$$

$\dot{q}(z) = [\mathrm{W/m^2}]$ Wärmeflußdichte-Vektor an der Position z
$\vec{e}_z$ = Einheitsvektor in z-Richtung
$E(z') = [\mathrm{V/m}]$ elektrischer Feldvektor an der Position z'
$j(z') = [\mathrm{A/m^2}]$ Stromdichte-Vektor an der Position z'

Daraus lässt sich die idealerweise ausschließlich von der z-Koordinate abhängige Temperatur T(z) mittels des nachfolgend wiedergegebenen Integrals bestimmen:

$$T(z) \;=\; T_{max} \;-\; k \cdot \int_0^z \overset{\vee}{q}(z')\, dz', \qquad k \;=\; \mathrm{const.}$$

Das parallel zur z-Achse 15 vorherrschende Temperaturprofil 60 ist durch eine Maximaltemperatur $T_{max}$ 61 in der zentralen Ebene 67 mit der Koordinate z = 0 gekennzeichnet. Von der Maximaltemperatur $T_{max}$ 61 ausgehend, stellt sich eine Temperaturabnahme zu den beiden stirnseitigen Enden der Zylinderanordnung 10 ein, d.h. in Richtung zu- bzw. abnehmender z-Koordinate auf das erste Raumende 64 an der Position +z/2 bzw. das zweite Raumende 65 an der Position -z/2 zu. Wird die elektrische Leistungsdichte p(z) über das gesamte Separationsmedium 6 als homogen angenommen, nimmt das Temperaturprofil 60 den in Figur 7 wiedergegebenen, quadratisch von der z-Koordinate abhängigen Verlauf an. Bei praktischen Anwendungen können jedoch aufgrund von sich einstellenden Ungenauigkeiten, Temperaturschwankungen oder Chargenverteilungsschwankungen Inhomogenitäten auftreten und zu einer nichtquadratischen Temperaturverteilung führen.

Beispiel:

Ein Trennaufbau 1 wurde unter verschiedenen Versuchsbedingungen zur Trennung von Proben mittels Elektrohorese getestet. Als Online-Detektions- und Datenaufnahmeeinheit diente der Prototyp eines ARAKIS-Sequenziergerätes. Die Beleuchtung des Detektionsbereiches 8 erfolgte senkrecht zur Probenmigrationsrichtung 14) durch einen Helium-Neon-Laser der Wellenlänge 594 nm (gelb) mit einer optischen Leistung von 3 W. Der Laser ist ebenfalls Bestandteil des ARAKIS-Sequenziergerätes.
Als Separationsmedium 6 wurde Polyacrylamid-Gel in verschiedenen Konzentrationen zwischen 10 und 20% eingesetzt. Die Separationsdistanz betrug 6 cm (z-Richtung) und der Durchmesser des das Separationsmedium 6 aufnehmenden ersten Raumes 2 betrug ebenfalls 6 cm. Bei der DNA-Sequenzierung werden unter diesen Bedingungen in einem standardisierten zweidimensionalen Gel Sequenzen mit einer Lesbarkeit von bis zu 150 bp Länge (bp = Basenpaare) erhalten.
Die elektrophoretische Leistung war auf 10 W begrenzt, wodurch sich eine Spannung von etwa 60 V zwischen den Elektroden 4, 5 einstellte. Dies entspricht bei einer Separationsdistanz von 6 cm einer elektrische Feldstärke von etwa 10 V/cm.
Die mit dem skizzierten Trennaufbau 1 unter oben angegebenen Bedingungen erhaltenen Resultate zeigten, daß DNA-Fragmente in einem Zeitraum von 4 bis 6 Stunden den Detektionsbereich erreichten, ohne daß sich ein Einfluß thermischer Effekte wie zum Beispiel ungleichmäßige Banden-Migration ("Smiling"-Effekt) bemerkbar machte.
Unter den oben genannten Bedingungen lag die Auftrennung der Banden jedoch stets unterhalb der Einzelbasen-Auflösung, selbst bei einer Erhöhung der Gel-Konzentration auf bis zu 20%. Als begrenzende Faktoren für die Trennleistung (Auflösung) wird die provisorische Art und Weise der Detektion, die starke Diffusion der Proben aufgrund ihrer langen Migrationszeit im schwachen elektrischen Feld und die nach langer Migrationszeit eintretende Erschöpfung der Pufferkapazität angesehen.

Wurde die Separationsdistanz in einem modifizierten Trennaufbau 1 auf 10 cm ausgedehnt, konnte dennoch Einzelbasen-Auflösung erzielt werden. DNA-Sequenzierungen, die unter diesen Bedingungen durchgeführt wurden, lieferten lesbare DNA-Sequenzen von etwa 50 bp (Basenpaare) Länge, was für Gen-Identifikation im Rahmen von Expressionsstudien ("signature sequencing") als ausreichend angesehen wird. Das erfindungsgemäße Verfahren eignet sich weiterhin für Simultan-DNA- und Protein-Sequenzierungen einer komplexen Anzahl von Einzelproben 29 im Rahmen von "Shotgun"-Sequenzierungen, parallelen "signature"-Sequenzierungen und für Sequenzierungen im Rahmen der Protein- und Expressionsanalyse. Die Dichte des im Trennaufbau 1 verwendeten Proben-Auftrages 7 bei den durchgeführten Experimenten betrug 2 mm Abstand zwischen den Einzelproben 29. Eine höhere Packungsdichte des Probenauftrages 7 bis auf Abstände unterhalb von 1 mm ist möglich.

**Bezugszeichenliste**

| | |
|---|---|
| 1 | Trennaufbau (Separationsapparatur) |
| 2 | erster Raum (hohl) |
| 2.1 | Raumbegrenzung |
| 2.2 | Durchmesser erster Raum |
| 3 | zweiter Raum |
| 3.1 | Raumbegrenzung |
| 3.2 | Durchmesser zweiter Raum |
| 4 | erstes Elektrodenelement |
| 5 | zweites Elektrodenelement |
| 6 | Separationsmedium |
| 7 | Probenplatte |
| 7.1 | Axiale Erstreckung (der Probenplatte) |
| 8 | Detektionsbereich |
| 9 | Radialerstreckung (der Probenplatte) |
| 10 | Zylinderanordnung |
| 11 | Boden |
| 12 | weiterer Raum (Reservoir) |
| 13 | Isolation |
| 14 | Probenmigrationsrichtung |
| 15 | z-Achse |
| 16 | x-Achse |
| 17 | y-Achse |
| 18 | Optik |
| 19 | Strahlengang |
| 20 | Illuminations-Strahlengang |
| 21 | Detektions-Strahlengang |
| 22 | Fokuspunkt/Fokuslinie |
| 23 | Bildaufnahmeeinheit |
| 24 | Bildebene |
| 25 | Abbildungsebene |
| 26 | Strahlungsquelle |
| 27 | Linse (zur Strahl-Auffächerung) |
| 28 | Sammellinse |
| 29 | Einzelproben |
| 30 | Datenaufnahmeeinheit |
| 31 | Puffermedium |
| 40 | Fenster |
| 41 | Schrägstellungswinkel $\alpha$ |
| 42 | Verschiebungsrichtung |
| 43 | Optische Achse |

| 44 | Detektor |
|----|----------|
| 45 | Detektionseinrichtung |
| 46 | (konfokaler) Meßkopf |
| 50 | Gradienten-Index-Linsenfeld |
| 52 | Laserstrahl |
| 54 | dichroitischer Strahlteiler |
| 56 | Detektorfeld |
| 60 | Temperaturprofil |
| 61 | Maximaltemperatur $T_{max}$ |
| 62 | Wärmetransportrichtung |
| 64 | erstes Raumende (+ z/2) |
| 65 | zweites Raumende (- z/2) |
| 67 | zentrale Ebene |

**Patentansprüche**

1. Verfahren zur parallelen Separation einer Vielzahl von Einzelproben (29) in einem Separationsmedium (6) mit den nachfolgenden Verfahrensschritten,

(a) in einem ersten Raum (2), der sich über alle drei Raumkoordinaten erstreckt, ist das Separationsmedium (6) aufgenommen, welches sich über die drei Raumkoordinaten erstreckt und in welches die Einzelproben (29) migrieren können,

(b) die Einzelproben (29) werden nahe einer Grenzfläche des ersten Raumes (2) angeordnet,

(c) die Einzelproben (29) werden flächenmässig zweidimensional angeordnet,

(d) Anlegen einer elektrischen Spannung an Elektroden (4, 5), die an Stirnseiten des ersten Raumes (2) angebracht sind, so dass die Einzelproben (29) durch das in dem ersten Raum (2) aufgenommene Separationsmedium (6) in einer Probenmigrationsrichtung (14), die senkrecht zu der flächenmässig zweidimensionalen Anordnung der Einzelproben ist, wandern, wobei eine Separation in Fraktionen erfolgt, und

(e) im ersten Raum (2) eine Temperaturverteilung erzeugt oder aufrechterhalten wird, die von einer senkrecht zur Probenmigrationsrichtung (14) verlaufenden Ebene unabhängig ist, indem an zwei Stirnflächen des ersten Raumes (2) eine Wärmeabfuhr gewährleistet ist, und der erste Raum (2) in radialer Richtung thermisch isoliert ist, und

(f) es erfolgt für die Einzelproben (29) nach Separation im ersten Raum (2) eine Detektion der Probenfraktionen, und alternativ oder ergänzend ein präparatives Aufsammeln der Probenfraktionen.

2. Verfahren gemäß Anspruch 1, **dadurch gekennzeichnet, dass** während der Migration eine Detektion der Einzelproben (29) in ausgewählten Bereichen innerhalb oder außerhalb des Separationsmediums (6) oder nahe einer Grenzfläche des Separationsmediums (6) erfolgt.

3. Verfahren gemäß einem oder mehrerer der Ansprüche 1 bis 2, **dadurch gekennzeichnet, dass** der Probenauftrag durch zweidimensionales Anordnen der Einzelproben (29) in oder auf einer zweidimensionalen Probenplatte erfolgt, die von außen in den ersten Raum (2) eingeführt werden kann, oder die Teil des Separationsmediums (6) ist.

4. Verfahren gemäß Anspruch 3, **dadurch gekennzeichnet, dass** die Einzelproben (29) an oder in Partikeln vorliegen, und die Partikel entsprechend ihrer physikalischen oder chemischen Eigenschaften in oder auf einer Probenplatte verteilt werden.

5. Verfahren gemäß Anspruch 4, **dadurch gekennzeichnet, dass** zur zweidimensionalen Verteilung der Partikel eine Vorrichtung oder Verfahren eingesetzt wird, bei dem die Partikel, durch einen Cell Sorter oder einen Fluoreszenz-Aktivierten Cell Sorter (FACS), in oder auf einer Probenplatte, verteilt werden.

6. Verfahren gemäß einem oder mehrerer der Ansprüche 3 bis 5, **dadurch gekennzeichnet, dass** die Einzelproben (29) aus einzelnen Molekülen oder einer Vielzahl von Molekülen vervielfacht werden.

7. Verfahren gemäß Anspruch 6, **dadurch gekennzeichnet, dass** die Einzelproben (29) durch Klonen und anschließende selektive Vermehrung vervielfacht werden.

8. Verfahren gemäß einem oder mehrerer der Ansprüche 4 bis 6, **dadurch gekennzeichnet, dass** die Einzelproben (29) durch PCR vervielfacht werden.

9. Verfahren gemäß einem oder mehrerer der Ansprüche 3 bis 8, **dadurch gekennzeichnet, dass** die Einzelproben (29) als Fraktionen einer Vorseparation einer oder mehrerer Ursprungsprobe(n) in oder auf einer Probenplatte angeordnet werden.

10. Verfahren gemäß Anspruch 9, **dadurch gekennzeichnet, dass** die Probenplatte aus einem Separationsmedium (6) besteht oder ein Separationsmedium (6) enthält, und die Anordnung der Fraktionen durch Separation einer oder mehrerer Proben in der Probenplatte erfolgt.

11. Verfahren gemäß Anspruch 10, **dadurch gekennzeichnet, dass** die Proben ihrerseits Fraktionen einer oder mehreren vorhergehenden Separation(en) sind, die durch präparativen Übertrag auf die Probenplatte transferiert wurden.

12. Vorrichtung zur Durchführung des Verfahrens gemäß einem oder mehrerer der vorhergehenden Ansprüche, umfassend einen Trennaufbau (1), **dadurch gekennzeichnet, dass**

(a) der Trennaufbau (1) einen ersten Raum (2) umfasst, der sich über drei Raumkoordinaten erstreckt,
(b) der erste Raum (2) so gestaltet ist, dass er ein Separationsmedium (6) aufnimmt, welches sich über die drei Raumkoordinaten erstreckt und in welches die Einzelproben (29) migrieren können,
(c) dem Trennaufbau (1) eine Vorrichtung zugeordnet ist, die es ermöglicht, dem Separationsmedium (6) an einer Grenzfläche die aufzutrennenden Einzelproben (29), zweidimensional in einer Ebene angeordnet, zuzuführen,
(d) der Trennaufbau (1) so gestaltet ist, dass durch Anlegen einer elektrischen Spannung an Elektroden (4, 5), die an Stirnseiten eines ersten Raumes (2) angebracht sind, die Einzelproben durch das in dem ersten Raum aufgenommene Separationsmedium (6) in einer Propagationsrichtung (14), die senkrecht zu der flächenmässig zweidimensionalen Anordnung der Einzelproben (29) ist, wandern und dadurch eine Auftrennung in Probenfraktionen erfolgen kann,
(e) der Trennaufbau (1) so gestaltet ist, dass im ersten Raum (2) eine Temperaturverteilung erzeugt oder aufrechterhalten werden kann, die von einer senkrecht zur Probenmigrationsrichtung (14) verlaufenden Ebenen unabhängig ist, indem an zwei Stirnflächen des ersten Raumes (2) eine Wärmeabfuhr gewährleistet ist, und der erste Raum (2) in radialer Richtung thermisch isoliert ist, und
(f) dem Trennaufbau (1) eine Vorrichtung zur Detektion der Probenfraktionen für die zweidimensional angeordneten Einzelproben (29), oder eine Vorrichtung zum präparativem Aufsammeln der Probenfraktionen für die zweidimensional angeordneten Einzelproben (29), zugeordnet ist.

13. Vorrichtung gemäß Anspruch 12, **dadurch gekennzeichnet, dass** dem Trennaufbau (1) eine Online-Detektionseinrichtung zugeordnet ist, die emittierte Strahlung nur aus einem ebenen Detektionsbereich (8) aufnimmt, durch den die Probenfraktionen hindurch migrieren.

14. Vorrichtung gemäß den Ansprüchen 12 oder 13, **dadurch gekennzeichnet, dass** dem Trennaufbau (1) eine Fraktionssammelvorrichtung zugeordnet ist, welche enthält:

(a) einen Transportmechanismus für Platten oder Schichten, die durch den Transportmechanismus periodisch an einer Grenzfläche des Separationskörpers gewechselt werden, so dass die dort austretenden Probenfraktionen je nach Retentionszeit auf verschiedenen Platten, oder Teilflächen einer Schicht oder Membran, gebunden werden oder
(b) einem Kapillaren-Array mit Eintrittsöffnungen nahe einer Grenzfläche des Separationsmediums (6) und Austrittsöffnungen über einer Fraktionssammelvorrichtung, so dass die Probenfraktionen beim Austritt aus dem Separationsmedium (6) durch das Kapillaren-Array aus dem Trennaufbau (1) herausgeführt werden können.

15. Vorrichtung gemäß einem oder mehrerer der Ansprüche 12 bis 14, **dadurch gekennzeichnet, dass** der Trennaufbau (1) so gestaltet ist, dass

(a) die Räume zwischen den Elektrodenelementen (4, 5) und dem Separationsmedium (6) mit einer Flüssigkeit aufgefüllt werden können
(b) an den Stirnflächen eine Wärmeabfuhr gewährleistet ist, durch eine Temperiervorrichtung mit Puffermedium (31) als Wärmetransportmedium, welches vom Zentrum (67) in Radialrichtung (9, 16) zur Peripherie oder in entgegengesetzter Richtung bewegt wird.

**16.** Vorrichtung gemäß Anspruch 15, **dadurch gekennzeichnet, dass** entlang einer Hochachse (15) eine Profiltemperiervorrichtung vorgesehen ist.

**17.** Vorrichtung gemäß einem oder mehrerer der Ansprüche 12 bis 16, **dadurch gekennzeichnet, dass** eine Detektionseinrichtung (45) vorgesehen ist, welche

(a) über eine Beleuchtungseinrichtung verfügt, die einen zweidimensionalen, ebenen Detektionsbereich (8) im Separationsmedium (6) oder nahe einer Grenzfläche des Separationsmediums (6) beleuchtet, und
(b) über ein optisches System verfügt, welches den Detektionsbereich (8) bildhaft auf einen Bilddetektor (23, 24) abbildet.

**Claims**

**1.** Process of parallel separation of a multiplicity of individual samples (29) in a separation medium (6), which process comprises the following steps:

(a) a first space (2) which extends across all three space coordinates receives the separation medium (6), which extends across the three space coordinates and into which the individual samples (29) can migrate,
(b) the individual samples (29) are arranged close to an interface of the first space (2),
(c) the individual samples (29) are arranged two-dimensionally in a planar manner,
(d) applying an electrical voltage to electrodes (4, 5) attached to end faces of the first space (2) such that the individual samples (29) migrate through the separation medium (6) received by the first space (2) in a direction of sample migration (14) which is perpendicular to the planar two-dimensional arrangement of the individual samples and are separated into fractions, and
(e) a temperature distribution which is independent of a plane running perpendicular to the direction of sample migration (14) is generated or maintained in the first space (2) by ensuring heat discharge at two end faces of the first space (2), and the first space (2) being thermally insulated in the radial direction, and
(f) for the individual samples (29), after separation in the first space (2), the sample fractions are detected and, alternatively or additionally, preparatively collected.

**2.** Process according to Claim 1, **characterized in that**, during migration, the individual samples (29) are detected in selected regions within or outside the separation medium (6) or close to an interface of the separation medium (6).

**3.** Process according to one or more of Claims 1 and 2, **characterized in that** the sample is applied by two-dimensionally arranging the individual samples (29) in or on a two-dimensional sample plate which can be introduced into the first space (2) from the outside or which is part of the separation medium (6).

**4.** Process according to Claim 3, **characterized in that** the individual samples (29) are present on or in particles, and the particles are distributed according to their physical or chemical properties in or on a sample plate.

**5.** Process according to Claim 4, **characterized in that** the two-dimensional distribution of the particles is carried out using a device or process in which the particles are distributed, by a cell sorter or a fluorescence-activated cell sorter (FACS), in or on a sample plate.

**6.** Process according to one or more of Claims 3 to 5, **characterized in that** the individual samples (29) are multiplied from individual molecules or from a multiplicity of molecules.

**7.** Process according to Claim 6, **characterized in that** the individual samples (29) are multiplied by cloning and subsequent selective propagation.

**8.** Process according to one or more of Claims 4 to 6, **characterized in that** the individual samples (29) are multiplied by means of PCR.

**9.** Process according to one or more of Claims 3 to 8, **characterized in that** the individual samples (29) are arranged in or on a sample plate as fractions of a preseparation of one or more source samples(s).

10. Process according to Claim 9, **characterized in that** the sample plate consists of or contains a separation medium (6) and the fractions are arranged by separating one or more samples in the sample plate.

11. Process according to Claim 10, **characterized in that** the samples for their part are fractions of one or more preceding separation(s), which fractions have been transferred to the sample plate by preparative transfer.

12. Device for carrying out the process according to one or more of the preceding claims, comprising a separating structure (1), **characterized in that**

(a) the separating structure (1) comprises a first space (2) which extends across three space coordinates,
(b) the first space (2) is designed so as to receive a separation medium (6), which extends across the three space coordinates and into which the individual samples (29) can migrate,
(c) a device which enables the individual samples (29) which are to be fractionated at an interface and which are arranged two-dimensionally in a plane to be delivered to the separation medium (6) is assigned to the separating structure (1),
(d) the separating structure (1) is designed in such a way that applying an electrical voltage to electrodes (4, 5) attached to end faces of a first space (2) causes the individual samples to migrate through the separation medium (6) received by the first space in a direction of propagation (14) which is perpendicular to the planar two-dimensional arrangement of the individual samples (29), thereby enabling fractionation into sample fractions,
(e) the separating structure (1) is designed in such a way that a temperature distribution which is independent of a plane running perpendicular to the direction of sample migration (14) can be generated or maintained in the first space (2) by ensuring heat discharge at two end faces of the first space (2), and the first space (2) being thermally insulated in the radial direction, and
(f) a device for detecting the sample fractions for the two-dimensionally arranged individual samples (29), or a device for preparatively collecting said sample fractions for the two-dimensionally arranged individual samples (29), is assigned to the separating structure (1).

13. Device according to Claim 12, **characterized in that** an online detection apparatus which records emitted radiation only of a planar detection area (8), through which area the sample fractions migrate, is assigned to the separating structure (1).

14. Device according to Claims 12 or 13, **characterized in that** a fraction-collecting device which comprises:

(a) a transport mechanism for plates or layers which are periodically changed by said transport mechanism at an interface of the separation body so that the sample fractions eluting there are bound on different plates or subareas of a layer or membrane, depending on the retention time, or
(b) a capillary array with inlets close to an interface of the separation medium (6) and outlets via a fraction-collecting device, so that the sample fractions when eluting from the separation medium (6) can be directed through the capillary array out of the separating structure (1),

is assigned to the separating structure (1).

15. Device according to one or more of Claims 12 to 14, **characterized in that** the separating structure (1) is designed in such a way that

(a) the spaces between the electrode elements (4, 5) and the separation medium (6) can be filled with a liquid,
(b) heat discharge at the end faces is ensured by a temperature-control device containing buffer medium (31) as a heat transport medium which is moved radially (9, 16) from the center (67) to the periphery or in the opposite direction.

16. Device according to Claim 15, **characterized in that** a profile temperature-control device is provided along a vertical axis (15).

17. Device according to one or more of Claims 12 to 16, **characterized in that** a detection apparatus (45) is provided which

(a) has an illumination apparatus which illuminates a two-dimensional, planar detection area (8) in the separation medium (6) or close to an interface of said separation medium (6), and
(b) has an optical system which projects the detection area (8) in the form of an image onto an image detector (23, 24).

**Revendications**

1. Procédé pour la séparation en parallèle d'une multitude d'échantillons individuels (29) dans un milieu de séparation (6) avec les étapes suivantes du processus,

(a) dans un premier espace (2) s'étendant dans toutes les trois coordonnées de l'espace, se trouve le milieu de séparation (6) s'étendant dans les trois coordonnées de l'espace et dans lequel les échantillons individuels (29) peuvent migrer,
(b) les échantillons individuels (29) sont disposés à proximité d'une surface de séparation du premier espace (2),
(c) les échantillons individuels (29) sont disposés sous forme de surface bidimensionnelle,
(d) application d'une tension électrique à des électrodes (4, 5) placées sur les faces frontales du premier espace (2) de telle sorte que les échantillons individuels (29) cheminent à travers le milieu de séparation (6) se trouvant dans le premier espace (2) dans une direction de migration de l'échantillon (14) perpendiculaire à la disposition des échantillons individuels sous forme de surface bidimensionnelle, une séparation en fractions en résultant, et
(e) dans le premier espace (2), on produit ou on maintient une répartition de température indépendante d'un plan se propageant perpendiculairement à la direction de migration de l'échantillon (14), une évacuation de la chaleur sur deux surfaces frontales du premier espace (2) étant assurée et le premier espace (2) étant thermiquement isolé dans la direction radiale,
et
(f) pour les échantillons individuels (29), après séparation dans le premier espace (2), il s'opère une détection des fractions d'échantillons, et en alternative ou en complément un regroupement de préparation des fractions d'échantillons.

2. Procédé selon la revendication 1, **caractérisé en ce que** pendant la migration, une détection des échantillons individuels (29) a lieu dans des domaines sélectionnés à l'intérieur ou à l'extérieur du milieu de séparation (6) ou à proximité d'une surface de séparation du milieu de séparation (6).

3. Procédé selon une ou plusieurs des revendications 1 à 2, **caractérisé en ce que** le dépôt des échantillons s'effectue par la disposition bidimensionnelle des échantillons individuels (29) dans ou sur une plaque d'échantillons bidimensionnelle qui peut être introduite à partir de l'extérieur dans le premier espace (2) ou qui constitue une partie du milieu de séparation (6).

4. Procédé selon la revendication 3, **caractérisé en ce que** les échantillons individuels (29) existent sur ou dans des particules, et les particules sont réparties en fonction de leurs caractéristiques physiques ou chimiques dans ou sur une plaque d'échantillons.

5. Procédé selon la revendication 4, **caractérisé en ce que** pour la répartition bidimensionnelle des particules, on met en oeuvre un dispositif ou un procédé dans lequel les particules sont réparties par un Cell Sorter ou un Cell Sorter activé par fluorescence (FACS) dans ou sur une plaque d'échantillons.

6. Procédé selon une ou plusieurs des revendications 3 à 5, **caractérisé en ce que** les échantillons individuels (29) sont multipliés à partir de molécules individuelles ou à partir d'une multitude de molécules.

7. Procédé selon la revendication 6, **caractérisé en ce que** les échantillons individuels (29) sont multipliés par clonage suivi de multiplication sélective.

8. Procédé selon une ou plusieurs des revendications 4 à 6, **caractérisé en ce que** les échantillons individuels (29) sont multipliés par PCR.

9. Procédé selon une ou plusieurs des revendications 3 à 8, **caractérisé en ce que** les échantillons individuels (29) sont disposés sous la forme de fractions d'une séparation initiale d'un ou de plusieurs échantillons d'origine dans ou sur une plaque d'échantillons.

**10.** Procédé selon la revendication 9, **caractérisé en ce que** la plaque d'échantillons est constituée d'un milieu de séparation (6) ou qu'elle contient un milieu de séparation (6), et la disposition des fractions s'effectue par séparation d'un ou de plusieurs échantillons dans la plaque d'échantillons.

**11.** Procédé selon la revendication 10, **caractérisé en ce que** les échantillons sont quant à eux des fractions d'une ou de plusieurs séparations antérieures qui ont été transférées par report de préparation sur la plaque d'échantillons.

**12.** Dispositif pour l'exécution du procédé selon une ou plusieurs des revendications précédentes, comprenant un montage de séparation (1), **caractérisé en ce que**

(a) le montage de séparation (1) comprend un premier espace (2) s'étendant dans trois coordonnées de l'espace,
(b) le premier espace (2) est conçu pour accueillir un milieu de séparation (6) s'étendant dans les trois coordonnées de l'espace et dans lequel les échantillons individuels (29) peuvent migrer,
(c) un dispositif est affecté au montage de séparation (1) ce qui permet d'acheminer les échantillons individuels (29) à dissocier vers le milieu de séparation (6) à une surface de séparation disposée dans un plan bidimensionnel,
(d) le montage de séparation (1) est conçu de telle sorte que l'application d'une tension électrique à des électrodes (4, 5) placées sur les faces frontales d'un premier espace (2) fasse cheminer les échantillons individuels à travers le milieu de séparation (6) se trouvant dans le premier espace dans une direction de propagation (14) perpendiculaire à la disposition des échantillons individuels (29) sous forme de surface bidimensionnelle, ce qui permet une dissociation en fractions d'échantillons,
(e) le montage de séparation (1) est conçu de telle sorte que dans le premier espace (2), on peut produire ou maintenir une répartition de température indépendante d'un plan se propageant perpendiculairement à la direction de migration de l'échantillon (14), une évacuation de la chaleur sur deux surfaces frontales du premier espace (2) étant assurée et le premier espace (2) étant thermiquement isolé dans la direction radiale, et
(f) un dispositif de détection des fractions d'échantillons pour les échantillons individuels (29) disposés de manière bidimensionnelle ou un dispositif de regroupement de préparation des fractions d'échantillons pour les échantillons individuels (29) disposés de manière bidimensionnelle est affecté au montage de séparation (1).

**13.** Dispositif selon la revendication 12, **caractérisé en ce qu'**un équipement de détection en ligne est affecté au montage de séparation (1) qui n'enregistre le rayonnement émis qu'à partir d'un domaine de détection (8) plan à travers lequel migrent les fractions d'échantillons.

**14.** Dispositif selon les revendications 12 ou 13, **caractérisé en ce qu'**un dispositif de regroupement de fractions d'échantillons est affecté au montage de séparation (1) qui contient:

(a) un mécanisme de transport pour plaques ou couches, qui sont changées périodiquement à une surface de séparation du corps de séparation de telle sorte que les fractions qui en sortent à cet endroit sont reliées en fonction de leur durée de rétention à différentes plaques, ou surfaces partielles d'une couche ou membrane ou
(b) à une mosaïque de capillaires avec des ouvertures d'entrée proches d'une surface de séparation du milieu de séparation (6) et des ouvertures de sortie au-dessus d'un dispositif de regroupement de fractions d'échantillons, de telle sorte qu'à la sortie du milieu de séparation (6), les fractions d'échantillons puissent être acheminées vers l'extérieur du montage de séparation (1) à travers la mosaïque de capillaires.

**15.** Dispositif selon une ou plusieurs des revendications 12 à 14, **caractérisé en ce que** le montage de séparation (1) est conçu de telle sorte que:

(a) les espaces entre les éléments d'électrodes (4, 5) et le milieu de séparation (6) peuvent être remplis avec un liquide
(b) une évacuation de la chaleur sur les surfaces frontales est assurée par un dispositif destiné à tempérer au moyen d'un milieu tampon (31) faisant office de milieu de transport de la chaleur qui est déplacé à partir du centre (67) en direction radiale (9, 16) vers la périphérie ou en sens opposé.

**16.** Dispositif selon la revendication 15, **caractérisé en ce qu'**un dispositif destiné à tempérer le profil est prévu le long d'un axe vertical (15).

**17.** Dispositif selon une ou plusieurs des revendications 12 à 16, **caractérisé en ce qu'**un équipement de détection (45) est prévu qui

(a) dispose d'un équipement d'éclairage qui éclaire un domaine de détection (8) bidirectionnel plan dans le milieu de séparation (6) ou à proximité d'une surface de séparation du milieu de séparation (6), et
(b) dispose d'un système optique qui reproduit l'image du domaine de détection (8) sur un détecteur d'image (23, 24).

**Fig. 1**

**Fig. 2**

# Fig. 3

**Fig. 4**

**Fig. 5**

# Fig. 6

# Fig 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5051162 A
- WO 9900664 A
- US 6120667 A
- US 5622819 A
- WO 0073777 A
- US 2002168643 A1
- EP 1186886 A2

**In der Beschreibung aufgeführte Nicht-Patentliteratur**

- **SIDNEY BRENNER ; MARIA JOHNSON ; JOHN BRIDGHAM ; GEORGE GOLDA ; DAVID H. LLOYD ; DAVIDA JOHNSON ; SHUJUN LUO ; SARAH MCCURDY ; MICHAEL FOY ; MARK EWAN et al.** Gene Expression Analysis by massively parallel signature sequencing (MPSS) on microbead arrays. *Nature Biotechnology,* Juni 2000, vol. 18, 630-634
- **NORIKO KUSUKAWA ; MIKHAIL V. OSTROVSKY ; MARK M. GARNER.** Effect of gelation conditions on the gel structure and resolving power of agarose-based DNA sequencing gels. *Elektrophoresis,* 1999, vol. 20, 1455-1460